(19) Europäisches Patentamt / European Patent Office / Office européen des brevets

(11) **EP 3 188 405 B1**

(12) **EUROPEAN PATENT SPECIFICATION**

(45) Date of publication and mention of the grant of the patent:
**25.09.2019 Bulletin 2019/39**

(21) Application number: **15836464.6**

(22) Date of filing: **24.07.2015**

(51) Int Cl.:
*H04L 9/14* (2006.01)       *G06F 21/16* (2013.01)
*G11B 20/10* (2006.01)      *H04N 5/91* (2006.01)
*H04N 5/93* (2006.01)       *H04N 5/913* (2006.01)
*G11B 20/00* (2006.01)      *G11B 20/12* (2006.01)

(86) International application number:
**PCT/JP2015/071079**

(87) International publication number:
**WO 2016/031457 (03.03.2016 Gazette 2016/09)**

(54) **INFORMATION PROCESSING DEVICE, INFORMATION RECORDING MEDIUM, INFORMATION PROCESSING METHOD, AND PROGRAM**

INFORMATIONSVERARBEITUNGSVORRICHTUNG, INFORMATIONSAUFZEICHNUNGSMEDIUM, INFORMATIONSVERARBEITUNGSVERFAHREN UND PROGRAMM

DISPOSITIF DE TRAITEMENT D'INFORMATIONS, SUPPORT D'ENREGISTREMENT D'INFORMATIONS, PROCÉDÉ DE TRAITEMENT D'INFORMATIONS ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2014 JP 2014173760**

(43) Date of publication of application:
**05.07.2017 Bulletin 2017/27**

(73) Proprietor: **Sony Corporation**
**Tokyo 108-0075 (JP)**

(72) Inventors:
• **KOBAYASHI, Yoshiyuki**
  **Tokyo 108-0075 (JP)**

• **UEDA, Kenjiro**
  **Tokyo 108-0075 (JP)**

(74) Representative: **Witte, Weller & Partner Patentanwälte mbB**
**Postfach 10 54 62**
**70047 Stuttgart (DE)**

(56) References cited:
**JP-A- 2006 236 120       JP-A- 2006 236 121**
**JP-A- 2006 236 508       US-A1- 2004 156 621**
**US-A1- 2008 022 131**

**Description**

TECHNICAL FIELD

The present disclosure relates to an information processing device, and an information processing method, and a program. More specifically, the present disclosure relates to an information processing device, an information recording medium, and an information processing method, and a program which enable the source of an illegally circulated content to be tracked.

BACKGROUND ART

Digital versatile discs (DVDs) and Blu-ray (registered trademark) discs (BDs) are often used as an information recording medium (medium) for recording various content such as movie and music.

The copyrights, the distribution rights, and the like of many pieces of content such as music data and video data recorded on these information recording media are possessed by the authors or the sellers thereof. Thus, when content is stored in such an information recording medium (medium) and are provided to users, use control of allowing users having an authorized use right only to use content is generally performed.

Specifically, a control process of recording content as an encrypted content so that the encrypted content can be decrypted by an encryption key provided to a user who has performed an authorized content purchasing process is performed. However, even when such a process is performed, if the user who has acquired the encrypted content performs a process of illegally distributing or revealing the decrypted content or the encryption key, the content may be illegally used by a large number of unspecified individuals. Particularly, in recent years, there are many cases of illegally revealing and distributing data via a network and how these illegal actions can be prevented is an important issue.

As one of countermeasures for preventing circulation of illegal content, a configuration for identifying a device that has performed a decryption process on the basis of decrypted (plaintext) content is known.

In this configuration, a decrypted content (for example, decrypted video data) generated by decrypting an encrypted content is analyzed and a device that has performed a decryption process is identified on the basis of identification data extracted from a video.

A configuration which enables the source to be tracked is disclosed in Patent Document 1 (Japanese Patent Application Laid-Open No. 2006-236121) and Patent Document 2 (Japanese Patent Application Laid-Open No. 2007-43336), for example.

According to the configuration disclosed in these Patent Documents, a segment which is data that constitutes content (for example, a video of the scenes that constitute a movie content) is set as a plurality of items of variation data which enables the segment to be decrypted using different keys. Each reproduction device selects one item of decryptable data from the plurality of items of variation data using a key unique to the reproduction device stored in the reproduction device to decrypt the selected data, and performs reproduction. Reproduction devices that store different keys decrypt different items of variation data to perform reproduction. In this manner, different items of variation data are selected depending on the reproduction device and the selected items of variation data are reproduced. That is, a reproduction process is performed according to different reproduction paths corresponding to the reproduction devices.

For example, when copy data of a decrypted content is circulated via a network, by analyzing variation data or a reproduction path included in the content, a device that has decrypted the content can be specified to some extent.

Note that encryption keys (decryption keys) stored in the respective reproduction devices are different depending on the manufacturer or the like of the device and it is possible to track the source according to such a setting unit.

However, for example, when a movie content having variation data is stored in a disc, it is necessary to record a plurality of videos of the same scene that constitutes variation data on a disc.

This poses a problem that the volume of data recorded on the disc increases.

Furthermore, each reproduction device needs to select and reproduce one item of data from a video of the same scene recorded on a disc. In this reproduction process, data recoded on the disc is not successively read and reproduced but it is necessary to perform a reproduction process which involves a jump of a predetermined distance.

When reproduction which involves a jump is performed, the reproduced video may be interrupted.

In order to prevent interruption of the reproduced video, although it is necessary to determine an arrangement of items of data recorded on the disc while taking the time required for the jump into consideration, for example, such a data arrangement is very difficult because the data arrangement depends on the length or the number of items of variation data.

Moreover, in order to select and reproduce items of variation data, it is necessary to set a playlist which is reproduction control information corresponding to each reproduction path so as to correspond to each reproduction path. However, the allowable number of settable playlists that store items of variation data is limited to an upper limit (= 1024) for one content recorded on a disc, and a largest number of settable reproduction paths is limited to 1024.

With the limitations, in a process of specifying the source of illegal copy content based on the variation data, the source can be narrowed down up to 1/1024 only for all players (reproduction devices). This narrowing-down level can only specify the type of reproduction devices, for example, and it is difficult to specify the source for one reproduction device or the like.

US 2008/0022131 A1 discloses an information recording medium manufacturing method that includes the steps of:

determining an encryption mode of each sector, which serves as an encrypt processing unit; generating encrypted data having different variations by using a plurality of cryptographic keys for a segment portion; generating encrypted data by using a single cryptographic key for a non-segment portion; and

recording the encrypted data. In determining the encryption mode, a cryptographic key for each sector is specified on the basis of an auxiliary file including determination information indicating whether each sector is data of a segment portion or data of a non-segment portion and identification information for identifying a segment and a variation associated with the sector if the sector is found to be the data of a segment portion.

In generating the encrypted data for the segment portion or for the non-segment portion, the encrypted data is generated by using the specified cryptographic key.

US 2004/0156621 A1 discloses a recording medium that includes at least one data area storing video data for at least one segment of a title. The video data is recorded as video data packets and at least a portion of the video data packets associated with different reproduction paths for the segment are multiplexed. In one exemplary embodiment, the multiplexed video data packets are multiplexed on a video data packet basis. In another exemplary embodiment, the video data packets associated with each reproduction path for the segment are recorded as one or more groups and the groups are multiplexed.

CITATION LIST

PATENT DOCUMENT

Patent Document 1: Japanese Patent Application Laid-Open No. 2006-236121 Patent Document 2: Japanese Patent Application Laid-Open No. 2007-43336

SUMMARY OF THE INVENTION

PROBLEMS TO BE SOLVED BY THE INVENTION

The present disclosure has been made in view of such a problem and an object thereof is to provide an information processing device, an information recording medium, and an information processing method, and a program which enable the source of illegal copy content to be tracked more effectively and enable circulation and use of the illegal copy content to be suppressed.

The claimed subject matter is defined in the appended independent claims. Further refinements are defined in the dependent claims.

A first aspect of the present disclosure is an information processing device as defined in the appended independent claim 1.

Furthermore, a second aspect of the present disclosure is an information recording medium as defined in the appended independent claim 11.

Furthermore, a third aspect of the present disclosure is an information processing method executed by an information processing device as defined in the appended independent claim 13.

Furthermore, a fourth aspect of the present disclosure is a program that causes an information processing device to process information as defined in the appended independent claim 14.

SOLUTIONS TO PROBLEMS

Note that the program of the present disclosure is a program that can be provided in a computer-readable format from a storage medium or a communication medium to an information processing device or a computer system that can execute various program codes, for example. When such a program is provided in a computer-readable format, processes in accordance with the program are realized in an information processing device or a computer system.

Other objects, features, and advantages of the present disclosure will be made apparent by the embodiments of the present disclosure described below and the detailed descriptions with reference to the accompanying drawings. Note that in this specification, a system is a logical assembly of devices, and does not necessarily mean devices with different configurations incorporated into one housing.

EFFECTS OF THE INVENTION

According to a configuration of one embodiment of the present disclosure, a configuration in which the reliable source of illegal copy content is analyzed using content in which a reproduction path can be set is realized.

Specifically, content which has a segment area including a plurality of items of variation data which can be decrypted using different keys and in which a reproduction path corresponding to the selected variation data can be set is used. Each item of variation data is configured such that embedded information such as a digital watermark can be acquired from decrypted data. Each item of variation data includes a 192-byte source packet or a 6144-byte aligned unit. A reproduction device selects and reproduces one item of variation data from each segment area on the basis of a variation data identifier recorded in the variation data.

With this configuration, a configuration in which the reliable source of illegal copy content is analyzed using content in which a reproduction path can be set is realized.

Note that the advantageous effects described in this specification are merely examples, and the advantageous effects of the present disclosure are not limited to them and may include additional effects.

BRIEF DESCRIPTION OF DRAWINGS

Figs. 1(1) and 1(2) are diagrams for describing a configuration example of content in which a reproduction path corresponding to a reproduction device can be set.

Fig. 2 is a diagram for describing an example of detecting identification information from configuration data of content in which a reproduction path corresponding to a reproduction device can be set.

Fig. 3 is a diagram for describing a configuration example of a directory of data recorded on a medium according to a BDMV format.

Fig. 4 is a diagram for describing correlation between reproduction data and a playlist defined in a BDMV format.

Figs. 5(A) to 5(E) are diagrams for describing a configuration example of MPEG-2TS (transport stream) as a data configuration of a clip AV stream (Clip AV Stream) file.

Figs. 6(1) to 6(3) are diagrams for describing a configuration example of a PES packet and MPEG-2TS (transport stream) as a data configuration of a Clip AV Stream (Clip AV Stream) file.

Figs. 7 (A) to 7 (C) and 7 (1) are diagrams for describing an example in which variation data is configured using one source packet.

Figs. 8(1) to 8(3) are diagrams for describing a setting example of a variation data identifier.

Fig. 9 is a diagram illustrating a flowchart for describing the sequence of a content reproduction process.

Figs. 10(A), 10(B) and 10 (1) are diagrams for describing an example in which variation data is configured using one aligned unit.

Figs. 11(1) and 11(2) are diagrams for describing a setting example of a variation data identifier.

Figs. 12(a) and 12(b) are diagrams for describing a setting example of a variation data identifier.

Fig. 13(c) is a diagram for describing a setting example of a variation data identifier.

Fig. 14 is a diagram illustrating a flowchart for describing the sequence of a content reproduction process.

Fig. 15 is a diagram for describing an example of a segment key file.

Figs. 16(1) and 16(2) are diagrams for describing an example of recording variation data on a disc.

Fig. 17 is a diagram for describing an example of a variation map table.

Fig. 18 is a diagram for describing an example of a variation map table.

Fig. 19 is a diagram for describing an EP map.

Figs. 20(A) to 20(C2) are diagrams for describing an EP map.

Fig. 21 is a diagram for describing an EP map.

Fig. 22 is a diagram for describing an EP map when a plurality of items of variation data is set to a segment area.

Fig. 23 is a diagram for describing an EP map when a plurality of items of variation data is set to a segment area.

Figs. 24(1) and 24(2) are diagrams for describing an EP map when a plurality of items of variation data is set to a segment area.

Fig. 25 is a diagram for describing an example of identification information recorded in variation data.

Fig. 26 is a diagram for describing an example of identification information recorded in variation data.

Fig. 27 is a diagram for describing a hardware configuration example of an information processing device.

MODE FOR CARRYING OUT THE INVENTION

Hereinafter, the details of an information processing device, an information recording medium, and an information processing method, and a program according to the present disclosure will be described with reference to the drawings. Note that the description is given in the following order.

1. Overview of source tracking process based on reproduction path analysis
2. Embodiment in which variation data is set in units of source packets or aligned units

2-1. Detailed configuration of clip AV stream file
2-2. (First embodiment) Embodiment in which variation data is set in units of source packets
2-3. (Second embodiment) Embodiment in which variation data is set in units of aligned units

3. Various configurations suitable for variation data setting illustrated in Embodiments 1 and 2

3-1. Configuration of segment key file
3-2. Variation map table
3-3. Configuration in which reproduction target variation data can be selected using variant number
3-4. Configuration of EP map
3-5. Data embedded in variation data

4. Hardware configuration example of information processing device
5. Summary of configuration of present disclosure

[1. Overview of source tracking process based on reproduction path analysis]

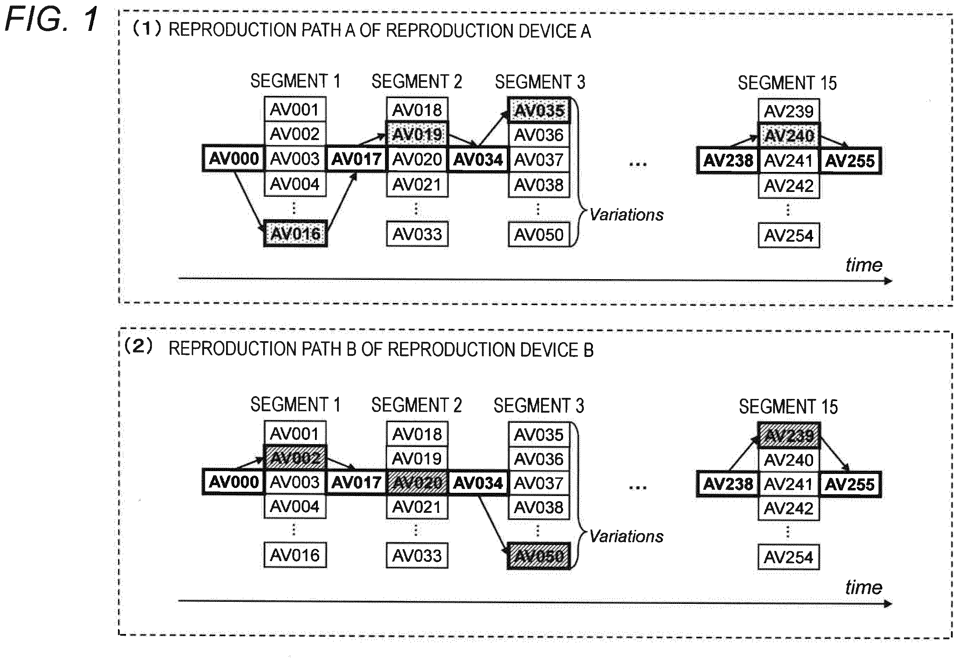

Prior to description of a configuration of the present invention, first, an overview of a source tracking process based on existing reproduction path analysis will be described.
An example of setting a reproduction path of content according to a reproduction device will be described with reference to Figs. 1(1) and 1(2).
Figs. 1(1) and 1(2) illustrate a configuration example of reproduction data recorded on a disc that stores content such as a movie, for example, and a data string (that is, a reproduction path) that each reproduction device selects when reproducing the content.
Figs. 1(1) and 1(2) illustrate two reproduction paths as below.

(1) Reproduction path A of reproduction device A
(2) Reproduction path B of reproduction device B

AV00 to AV255 illustrated in Figs. 1(1) and 1(2) are each reproduction data of content such as a movie (specifically, video data including video frames of several seconds, for example) . Items of reproduction data are arranged from left to right, and a reproduction device performs reproduction starting from AV000 up to AV255.
However, a plurality of items of video data of the same scene is set to a segment area (segments 1 to 15).
For example, sixteen items of video data AV001 to AV016 are set to segment 1.
Although these items of video data are the video data of the same scene, the sixteen items of video data AV001 to AV0016 are encrypted using different keys (segment keys).
The data encrypted using different encryption keys set in this segment area is referred to as variation data.
Each reproduction device can acquire a segment key from a segment key file stored in a disc together with the content using a key (a device key) or the like stored in the subject device.
However, the segment key that can be acquired using the device key stored in one reproduction device is only one segment key for each segment area.
That is, each reproduction device can acquire a segment key capable of decrypting one item of variation data among a plurality of items of variation data (for example, AV001 to AV016) of each segment area (for example, segment 1).
A combination of segment keys that can be acquired from a segment key file has a different setting depending on a device key stored in the reproduction device.
The reproduction device selects one item of decryptable variation data from one segment area using the segment key obtained from the segment key file to decrypt and reproduce the selected variation data.

An area to which only one item of data is set other than the segment area is referred to as a single data area or a non-segment area. For example, only one item of data is set to a reproduction area such as AV000 and AV017, and all reproduction devices reproduce only one item of data.

Note that the data in these single data areas is also encrypted data.

These items of data can be also decrypted using a CPS unit key that can be acquired from a CPS unit key file stored in a disc that stores the content.

A reproduction device acquires the CPS unit key from the CPS unit key file by a process using the device key stored in the reproduction device or the data stored in the disc.

In the example illustrated in Figs. 1(1) and 1(2), fifteen segment areas (segments 1 to 15) are set in the content.

Moreover, data (variation data = data that can be decrypted using different keys) encrypted using sixteen different keys (segment keys) is set to each of segments 1 to 15. Each of a plurality of items of data which can be decrypted using different keys set to the segment area is referred to as variation data.

A key for decrypting the variation data is a segment key. The segment key can be acquired from a segment key file stored in a disc together with a reproduction target content, for example.

However, the segment keys stored in the segment key file are individually encrypted, and a reproduction device can acquire partial segment keys by a decryption process using a device key or the like stored in the reproduction device.

The segment key that one reproduction device can acquire is a key that can decrypt only one item of variation data among the plurality of items of variation data set to each segment area.

A reproduction device acquires a segment key that can be acquired from a segment key file sequentially for each segment area and decrypts one item of variation data using the acquired segment key to execute a reproduction process.

In this manner, each reproduction device selects one item of decryptable variation data from one segment area to perform a reproduction process.

Reproduction devices that store different device keys execute reproduction processes corresponding to different reproduction paths.

The example illustrated in Fig. 1(1) illustrates a reproduction path of a reproduction device A.

The reproduction device A sequentially reproduces the following items of data.

AV000 → [AV016] → AV017 → [AV019] → AV034 → [AV035] ... → AV238 → [AV240] → AV255

This is the reproduction path A of the reproduction device A.

Note that in these items of reproduction data, data surrounded by [and] like [AVxxx] is the variation data set to each segment area.

The reproduction device A decrypts an encryption segment key stored in the segment key file using a key (a device key) or the like possessed by the reproduction device A from sixteen items of variation data (items of encrypted data) set to a segment area to acquire a segment key.

The reproduction device A selects variation data that can be decrypted using the acquired segment key and reproduces the selected variation data.

Data which is not surrounded by [and] is data to an area other than the segment area and is data reproduced in common by all reproduction devices.

On the other hand, the reproduction device B illustrated in Fig. 1(2) sequentially reproduces the following items of data.

AV000 → [AV002] → AV017 → [AV020] → AV034 → [AV050] ... → AV238 → [AV239] → AV255

This is the reproduction path B of the reproduction device B.

Among these items of reproduction data, data surrounded by [and] like [AVxxx] is the variation data.

The reproduction device B acquires partial segment keys from the segment key file using a device key stored in the reproduction device B.

Furthermore, the reproduction device B selects one item of variation data which can be decryptable from sixteen items of variation data (items of encrypted data) set to a segment area using the acquired segment keys and reproduces the selected variation data.

Data which is not surrounded by [and] is data to an area other than the segment area and is data reproduced in common by all reproduction devices.

Comparing the reproduction path A of the reproduction device A and the reproduction path B of the reproduction device B, the reproduction data of a single data area other than the segment area is the same. However, the items of variation data reproduced in the respective segment areas are different.

This is because the device key stored in the reproduction device A is different from the device key stored in the reproduction device B, and the combinations of segment keys that can be acquired from the respective segment key files are different.

A data identifier such as an identifier (for example, [AVxxx]) of variation data is embedded in the variation data set to a segment area in each reproduction path. For example, the identifier is embedded using a technique such as a digital watermark.

That is, by analyzing reproduced video data, it is possible to determine which variation data is reproduced.

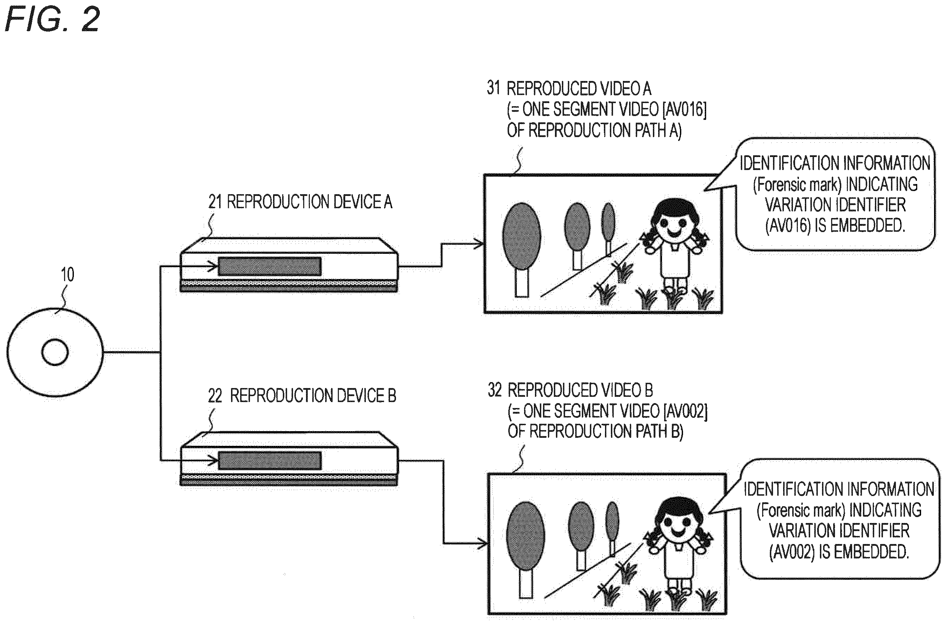

The video data reproduced by each reproduction device and a video analysis process on the reproduced video data will be described with reference to Fig. 2.

In an information recording medium (disc) 10 illustrated in Fig. 2, content including the segment area and the single data area described with reference to Figs. 1(1) and 1(2) are stored.

The reproduction device A (21) reproduces the content according to the reproduction path A described with reference to Fig. 1(1).

The reproduction device B (21) reproduces the content according to the reproduction path B described with reference to Fig. 1(2).

A reproduced video A (31) is variation data selected from one segment area and is the variation data [AV016] included in the reproduction path A.

A reproduced video B (32) is another item of variation data selected from the same segment area and is the variation data [AV002] included in the reproduction path B.

These two reproduced videos A and B are the videos of the same scene of a movie content, for example, and are the videos that viewers watch without any distinction.

However, the reproduced video A (31) is the variation data [AV016] included in the reproduction path A, and identification information (a data identifier) of the variation data [AV016] is embedded in the reproduced video A (31). For example, the identifier can be analyzed by a digital watermark analysis process.

Note that the identification information embedded in the reproduction data is called a forensic mark or a forensic watermark.

The other reproduced video B (32) is the variation data [AV002] included in the reproduction path B, and identification information (a data identifier) of the variation data [AV002] is embedded in the reproduced video B (32).

Fifteen segment areas (segments 1 to 15) are set to the content illustrated in Figs. 1(1) and 1(2).

For example, when an illegally circulated copy content is discovered from a network, the reproduction path of the content becomes clear by determining which variation data does the reproduced video of the fifteen segment areas included in the illegally circulated content correspond to.

For example, when the illegally circulated copy content is the content including the reproduction path A illustrated in Figs. 1(1) and 1(2), it can be determined that the content decrypted by the reproduction device A illustrated in Fig. 2 is the source data and that the reproduction device A is the source of the illegal copy content.

Moreover, for example, when the illegally circulated copy content is the content including the reproduction path B illustrated in Figs. 1(1) and 1(2), it can be determined that the content decrypted by the reproduction device B illustrated in Fig. 2 is the source data and that the reproduction device B is the source of the illegal copy content.

However, in order to select and reproduce the respective items of variation data, it is necessary to set a playlist which is the reproduction control information corresponding to each reproduction path so as correspond to each reproduction path. However, as described above, the allowable number of settable playlists is limited to an upper limit (= 1024) for one content recorded on a disc, and a largest number of settable reproduction paths is limited to 1024.

With the limitations, in a process of specifying the source of illegal copy content based on the variation data, the source can be narrowed down up to 1/1024 only for all players (reproduction devices). This narrowing-down level can only specify the type of reproduction devices, for example, and it is difficult to specify the source for one reproduction device or the like.

The unit of reproduction data selectable using a playlist as a reproduction target is a clip AV stream file, and each item of variation data is set as an individual clip AV stream file and is recorded on a disc.

The respective items of variation data (AV001 to AV254) of each segment described with reference to Figs. 1(1) and 1(2) are set as individual clip AV stream files.

A reproduction device selects one clip AV stream file that constitutes one item of variation data from each segment area according to one playlist and reproduces the selected clip AV stream file.

However, the data stored in this clip AV stream file is data corresponding to a reproduction time of approximately several seconds. Therefore, when sixteen items of variation data are set to each segment area and fifteen segment areas are set as illustrated in Figs. 1(1) and 1(2), the data amount of the items of variation data required for one content is considerably large.

The data amount is converted to a reproduction time as follows.

$$\text{(Total variation data reproduction time)} = 16 \times 15 \times \text{(several seconds)}$$

Therefore, it is necessary to record data of a long period on a disc and the variation data occupies a large recording area.

In order to reproduce a clip AV stream file that stores reproduction data, a clip information file is required as a reproduction control information file.

A reproduction start position, a reproduction end position, and the like of data stored in a clip AV stream file are stored in the clip information file, and an EP map or the like that records random access point information or the like is also stored.

One clip information file is always set so as to correspond to one clip AV stream file.

Therefore, (16 × 15) items of variation data illustrated in Figs. 1(1) and 1(2) include the following files:

(16 × 15) clip AV stream files; and
(16 × 15) clip information files.

When these items of data are recorded on a disc, the data occupies a considerably large data recording area of the disc.

A reproduction device selects one variation data from the sixteen items of variation data set to one segment area during reproduction of content and reproduces the selected variation data.

Sixteen sets of clip AV stream files and clip information files set to one segment area, for example, are sequentially arranged and recorded on a disc.

The reproduction device selects one of the sixteen sets of clip AV stream files and clip information files and reproduces the selected set of the clip AV stream file and the clip information file. When this selection and reproduction process is performed, the reproduction device has to jump a readout head (an optical head).

That is, it is necessary to perform a jump and reproduction process of jumping a variation data recording area which is not a reproduction target recorded on a disc, positioning a readout head at the recording position of the reproduction target variation data, and reproducing the variation data.

Such a head jumping process takes a predetermined period of time, and an interruption of reproduction may occur if the jumping processing time increases.

When variation data is set in units of clips as described above, the following problems may occur.

(a) The reproduction path can be set up to the allowable number of settable playlists (1024).
(b) Since the data amount of the clip AV stream file and the clip information file which are one item of variation data is large, the occupancy of a disc recording area by the variation data increases.
(c) A jumping process is required when a reproduction device performs a reproduction process, and a reproduction delay and a reproduction interruption may occur.

[2. Embodiment in which variation data is set in units of source packets or aligned units]

As described above, when the variation data set in content to enable the source to be tracked is set in units of clip files which include a clip AV stream file and a clip information file, the above-described problems occur.

Hereinafter, a configuration for solving these problems will be described. The following two embodiments will be described in order.

(First embodiment) Embodiment in which variation data is set in units of source packets
(Second embodiment) Embodiment in which variation data is set in units of aligned units

Note that the source packet and the aligned unit are configuration data of a clip AV stream file that stores video data which is reproduction target data.

The source packet is 192B (byte) data and the aligned unit is 6144B (byte) data including thirty-two source packets.

[2-1. Detailed configuration of clip AV stream file]

Prior to description of a specific configuration of the two embodiments, a detailed configuration of a clip AV stream file will be described as the description of the source packet and the aligned unit.

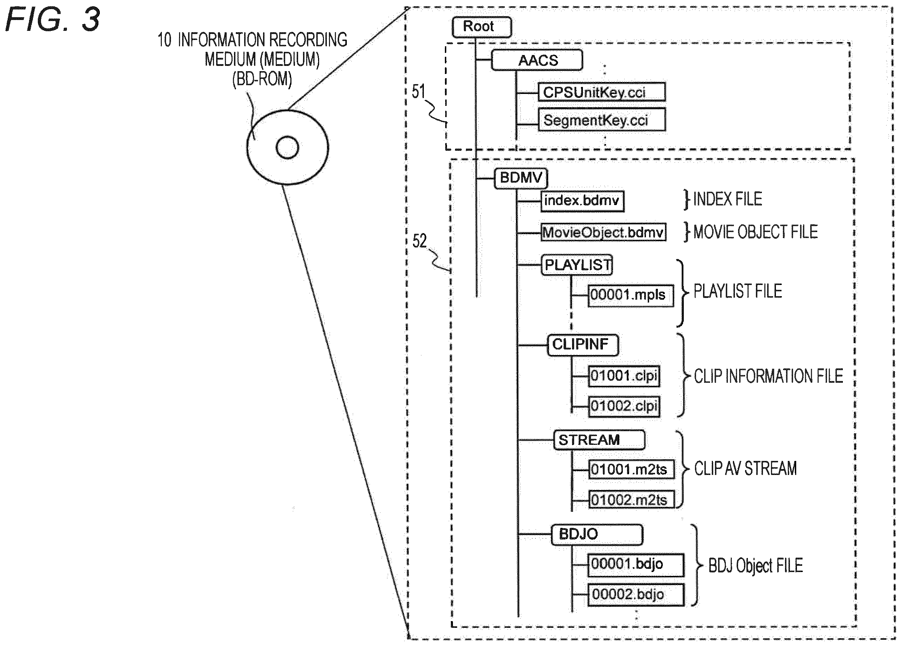

First, a recording format (BDMV format) when content such as a movie, for example, is recorded on a Blu-ray (registered trademark) disc (BD) will be described with reference to Fig. 3.

In the BDMV format, data such as video (Video), audio (Audio), or subtitle (Subtitle) which is reproduction target data is recorded by storing the same in a clip AV stream file.

The clip AV stream file is a file in which 188-byte transport stream (TS) packets are set as constituent elements.

The transport streampackets (that is, TS packets) are arranged according to an MPEG-2 transport stream (TS) format.

The MPEG-2 TS format is a format standardized in ISO13818-1, and is used for recording data on a Blu-ray (registered trademark) disc (BD), digital broadcasting, and the like.

The following items of encrypted data are examples of items of encrypted data of video, audio, and a still image which are allowed to be stored according to the MPEG-2 TS format.

Video: MPEG-1, MPEG-2, AVC (MPEG-4 AVC), HEVC (MPEG-4 HEVC) ;

Audio: MP1, MP2, MP3, linear PCM, DTS; and

Still image: JPEG

For example, the respective items of encrypted data are distributed to and stored in TS (transport stream) packets that are defined by MPEG-2 TS.

Fig. 3 is a diagram illustrating a directory of recording data according to the BDMV format, recorded on the information recording medium (medium) 10 which is a ROM-type BD (Blu-ray (registered trademark) Disc).

As illustrated in Fig. 3, a directory is divided into amanagement information setting portion 51 (anAACS directory) and a data portion 52 (a BDMV directory).

A CPS unit key file which is an encryption key of data, a segment key file, a use control information file, and the like are stored in the management information setting portion 51 (the AACS directory).

A CPS unit key used for decryption of the encrypted data set to a single data area (non-segment area) other than the segment area illustrated in Figs. 1(1) and 1(2) is stored in the CPS unit key file as the encryption key data.

A reproduction device can acquire the CPS unit key from the CPS unit key file by a process which uses the device key stored in the reproduction device or the data stored in the disc.

A segment key used for decrypting the variation data set to the segment area illustrated in Figs. 1(1) and 1(2) is stored in the segment key file as the encryption key data.

A reproduction device can acquire the segment key from the segment key file by a process which uses the device key stored in the reproduction device or the data stored in the disc.

However, as described above, the segment key that can be acquired from the segment key file using the device key stored in one reproduction device is only one segment key for each segment area.

That is, it is possible to acquire only one segment key for decrypting one of the plurality of items of variation data set to the segment area.

A combination of segment keys that can be acquired from a segment key file has a different setting depending on a device key stored in the reproduction device.

With this setting, a reproduction path corresponding to a reproduction device is set.

Note that the details of the process of acquiring the CPS unit key from the CPS unit key file and the process of acquiring the segment key from the segment key file are disclosed in Patent Document 1 (Japanese Patent Application Laid-Open No. 2006-236121) which is a prior application of the present applicant. In the process of the present disclosure described below, the process of acquiring the CPS unit key and the segment key is executed by the similar process as the process disclosed in the patent document.

On the other hand, for example, the following files are recorded in the BDMV directory of the data portion 52:

Index file;

Playlist file;

Clip information file;

Clip AV stream file; and

BDJO file.

Title information as index information used in a reproduction process is stored in the index file.

The playlist file is a file that defines a reproduction order or the like of content according to the program information of a reproduction program designated by the title and has designation information on clip information having reproduction position information.

The clip information file is a file designated by the playlist file and has reproduction position information or the like of the clip AV stream file.

The clip AV stream file is a file that stores reproduction target AV stream data.

The BDJO file is a file that stores execution control information of a file that stores a JAVA (registered trademark) program, a command, and the like.

The sequence in which an information processing device reproduces the content recorded on an information recording medium is as follows.

(a) First, a reproduction application designates a specific title from an index file.

(b) A reproduction program correlated with the designated title is selected.

(c) A playlist that defines a reproduction order or the like of content is selected according to a program information of the selected reproduction program.

(d) An AV stream or a command as actual data of the content is read according to the clip information defined in the selected playlist and an AV stream reproduction process or a command execution process is performed.

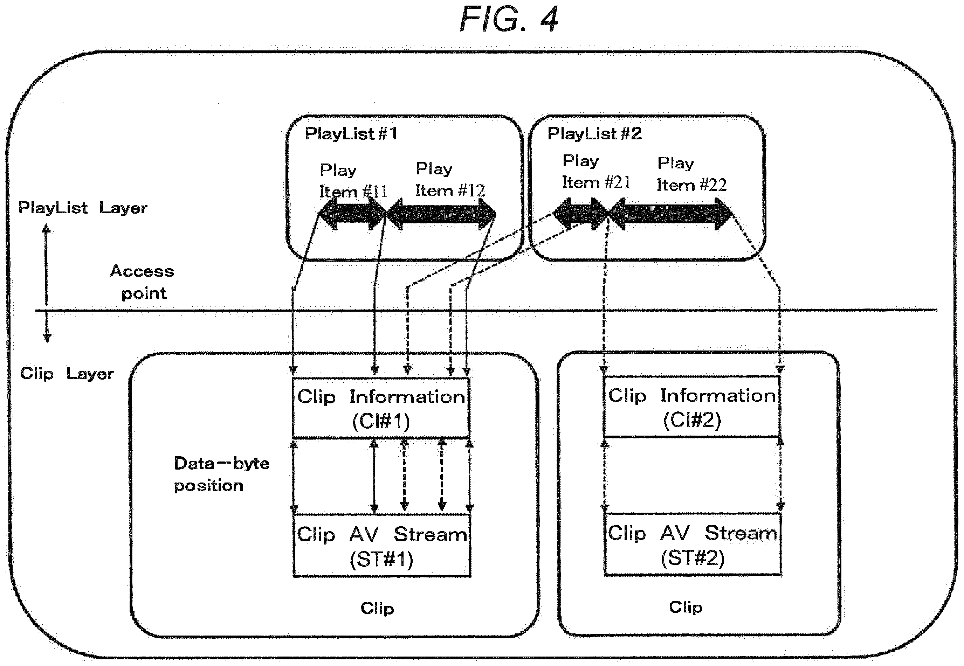

Fig. 4 is a diagram for describing the correlation of the following items of data recorded on the information recording medium (medium) 10.

Playlist file;

Clip information file; and

Clip AV stream file.

AV streams including video and audio data which is actual reproduction target data are recorded as a clip AV stream (Clip AV Stream) file, and management information of these AV streams, a playlist (PlayList) file as the reproduction control information file, and a clip information (Clip Information) file are defined.

These files of a plurality of categories can be classified into the following two layers as illustrated in Fig. 4:

A playlist layer that includes a playlist (PlayList) file; and

A clip layer including a clip AV stream (Clip AV Stream) file and a clip information (Clip Information) file.

Note that one clip information (Clip Information) file is correlated with one clip AV stream (Clip AV Stream), and these pairs are considered as one object and are collectively referred to a clip (Clip) or a clip file.

Detailed information (for example, management information such as an EP map that records I-picture position information or the like of MPEG data) of data included in the clip AV stream file is recorded in a clip information file.

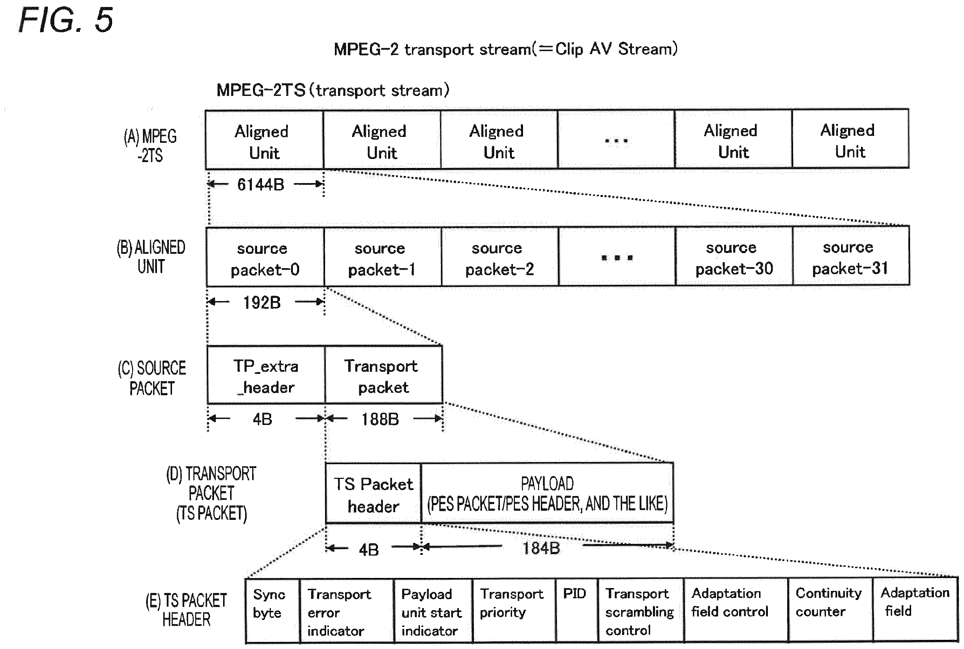

The clip AV stream (Clip AV Stream) file stores data in which MPEG-2TS (transport stream) is arranged according to a structure defined by the BDMV format. The details of this configuration will be described later with reference to Figs. 5 (A) to 5 (E).

Moreover, the clip information (Clip Information) file stores management information for acquiring a reproduction start position of input data of a clip AV stream file, such as correlation data such as, for example, a data position of byte string data of the clip AV stream file and a reproduction time position which is a reproduction start point (entry point: EP) when the clip AV stream file is deployed on a time axis.

The playlist has information which indicates an access point corresponding to a reproduction start position or a reproduction end position of a clip (Clip) using a time stamp which is information on a time axis.

For example, the address as a data read position (that is, a reproduction start point) of the clip AV stream file can be acquired by referring to the clip information file on the basis of a time stamp indicating a reproduction time progress position from the start point of content.

The clip information file (Clip Information file) is used for finding address information at which decoding of a stream in the clip AV stream file is to start from the time stamp.

As described above, the playlist (PlayList) file has designation information of a reproduction area of reproducible data included in a clip (= (clip information file) + (clip AV stream file)) layer.

One or more play items (PlayItems) are set to the playlist (PlayList) file, and each play item has designation information of a reproduction area of reproducible data included in a clip (= (clip information file) + (clip AV stream file)) layer.

A clip AV stream (Clip AV Stream) file that stores actual data of video or audio which is a reproduction target has a MPEG-2 transport stream (TS) file as illustrated in Figs. 5(A) to 5(E), for example.

As illustrated in Figs. 5(A) to 5(E), the MPEG-2 TS format has the following characteristics.

1) A MPEG-2 TS file includes an integer number of aligned units (Aligned Units).

2) The size of an aligned unit (Aligned Unit) is 6 kB (= 6144 bytes (2048 $\times$ 3 bytes)).

3) The aligned unit (Aligned Unit) starts from the first byte of a source packet.

4) The source packet has a length of 192 bytes. One source packet includes TP_extra_header and a TS packet. The TP_extra_header has a length of 4 bytes and the TS packet has a length of 188 bytes.

5) The TS packet has a header (TP header) and a payload portion. Encryption data of any one kind of data such as video or audio is stored in the payload of one TS packet.

6) A PID (program ID) indicating a data type of the payload is recorded in the header (TP header) of the TS packet.

7) The payload of the TS packet includes a packet (packetized elementary stream (PES) that stores an elementary stream (ES) which is encrypted data of video or audio, a PES header, and the like.

8) A presentation time stamp (PTS) indicating reproduction time information of an elementary stream (ES) stored in a subsequent PES packet and a decoding time stamp (DTS) indicating a decoding processing time are recorded in the PES header.

Furthermore, as illustrated in Fig. 5(E), the following respective items of data are stored in the header information of the TS packet.

(a) Synchronization byte (Sync byte);
(b) Transport error identifier (Transport_error_indicator);
(c) Payload unit start identifier (Payload_unit_start_indicator);
(d) Transport priority (Transport_priority);
(e) Program ID (PID);
(f) Transport scrambling control;
(g) Adaptation field control;
(h) Continuity counter; and
(i) Adaptation field.

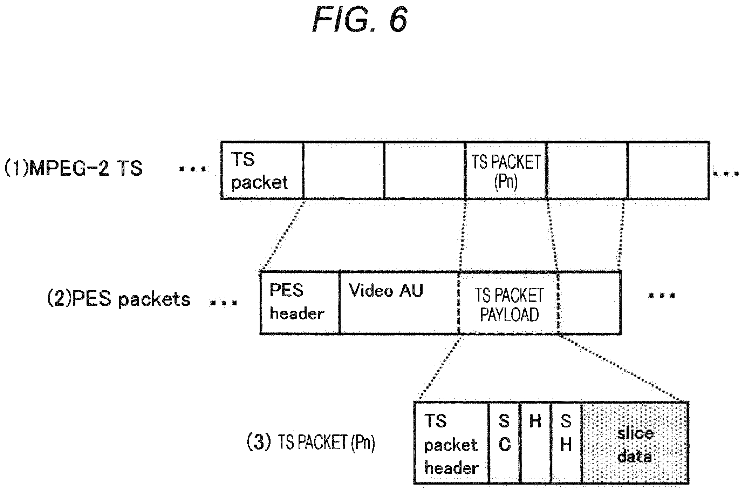

Figs. 6(1) to 6(3) are diagrams for describing configuration data of a PES packet (that is, a PES packet that stores encrypted data of one picture corresponding to one video frame and metadata thereof) defined in the MPEG-2 TS format.

A PES packet illustrated in Fig. 6(2) is a packet that stores video data corresponding to one video frame (one picture) and metadata including information used for a decryption process thereof as a payload.

The PES packet includes a plurality of TS packets as illustrated in Fig. 6(1).

Fig. 6(3) illustrates a detailed configuration example of one TS packet (Pn).

[2-2. (First embodiment) Embodiment in which variation data is set in units of source packets]

Next, an embodiment in which variation data is set in units of source packets will be described as the first embodiment.

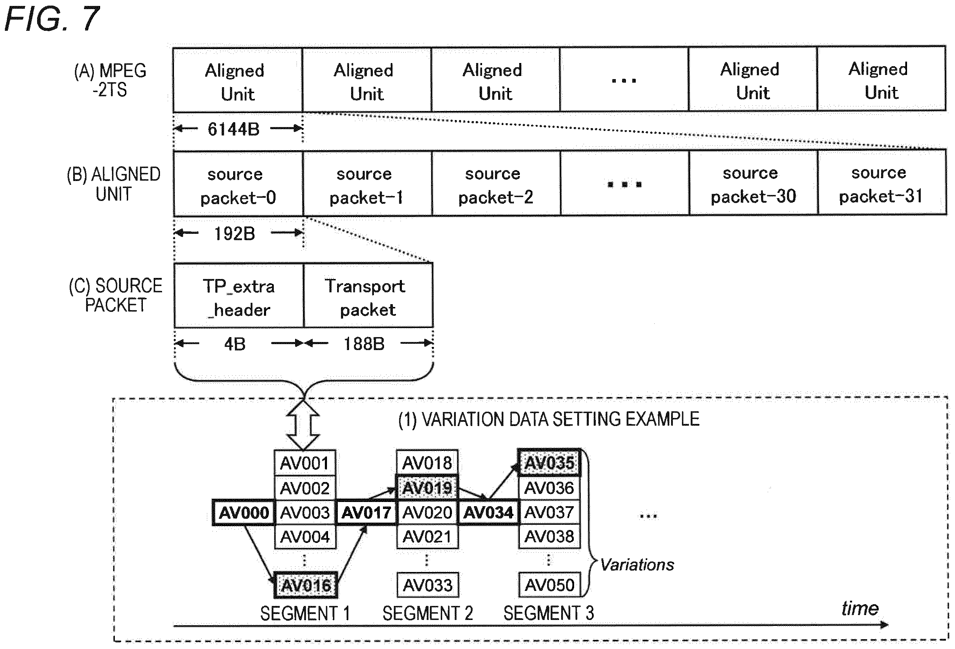

An example of a data configuration in which variation data is set in units of source packets according to the first embodiment will be described with reference to Figs. 7 (A) to 7(C) and 7(1).

First, Figs. 7(A) to 7(C) illustrate the following configuration of a clip AV stream file that stores video data or the like as reproduction data described with reference to Figs. 5(A) to 5(E).

(A) An MPEG-2 TS file having a configuration in which a plurality of 6144-byte aligned units (Aligned Units) are arranged.
(B) An aligned unit (AlignedUnit) having a configuration in which a plurality of 192-byte source packets are arranged.
(C) A source packet including a 4-byte header (TP_extra_header) and a 188-byte TS packet.

As illustrated in Figs. 7(A) to 7(C) and 7(1), in the first embodiment, a 192-byte source packet illustrated in Fig. 7(C) is set as one item of variation data.

Fig. 7(1) illustrates a variation data setting example.

A variation data setting example illustrated in Fig. 7(1) has a configuration in which different reproduction paths are set depending on a reproduction device similarly to the configuration described with reference to Figs. 1(1) to 2. That is, a plurality of segment areas is set and a plurality of items of variation data which can be decrypted using different segment keys is set to each segment area in order to set different reproduction paths to respective reproduction devices.

However, in the configuration described with reference to Figs. 1(1) and 1(2), each item of variation data [AVxxx] is set to individual clip AV stream files. However, in the present embodiment, each item of variation data [AVxxx] is set to individual source packets.

That is, each item of variation data includes one source packet of 192 bytes.

Items of variation data AV000, AV001, AV002, ..., and the like set to segment areas (segment 1 and the like) illustrated in Fig. 7(1) are items of video data of a scene that constitutes a certain movie content, for example. Each of these items of variation data is configuration data of one source packet of 192 bytes.

Items of video data corresponding to scenes reproduced sequentially are illustrated along a time axis (time) that progresses from left to right in the drawing.

For example, the first scene is AV000.

A source packet that stores sixteen items of video data (items of variation data) of AV001 to AV0016 is set as the subsequent data of the first source packet AV000.

These sixteen source packets store data corresponding to the same scene. However, the items of video data stored in the sixteen source packets AV001 to AV0016 are encrypted using different keys (segment keys).

Each reproduction device can acquire a segment key from a segment key file stored in a disc together with content using the key (device key) stored in the subject device.

However, the segment key which can be acquired using the device key stored in one reproduction device can decrypt only one item of variation data included in a plurality of items of variation data (for example, AV001 to AV016) set to one segment area (for example, segment 1).

A reproduction device selects one item of decryptable variation data from one segment area using the segment key obtained from the segment key file and performs a decryption process to reproduce content.

An area to which only one item of data is set other than the segment area is a single data area (non-segment area). For example, only one item of data is set to a reproduction area such as AV000 and AV017. In the single data area, all reproduction devices reproduce only one item of common data.

These items of data are reproduced by decrypting the same using a CPS unit key.

A segment key which is a key for decrypting variation data can be acquired from a segment key file stored in a disc together with a reproduction target content, for example.

However, the segment keys stored in the segment key file are encrypted individually, and the reproduction device can acquire partial segment keys by a decryption process which uses the device key or the like stored in the reproduction device.

A segment key that one reproduction device can acquire is a key which can decrypt only one item of variation data among a plurality of items of variation data set to the segment area.

A reproduction device acquires a segment key that can be acquired from a segment key file sequentially for each segment area and decrypts one item of variation data using the acquired segment key to execute a reproduction process.

In this manner, each reproduction device selects one item of decryptable variation data from one segment area to perform a reproduction process.

Reproduction devices that store different device keys execute reproduction processes according to different reproduction paths.

The example illustrated in Fig. 7(1) illustrates a reproduction path of a reproduction device A.

The reproduction device A sequentially reproduces the following items of data.

AV000 → [AV016] → AV017 → [AV019] → AV034 → [AV035]

This is the reproduction path A of the reproduction device A.

In these items of reproduction data, data surrounded by [and] like [AVxxx] is the variation data set to each segment area.

The reproduction device A decrypts an encryption segment key stored in the segment key file using a key (a device key) or the like possessed by the reproduction device A from sixteen items of variation data (items of encrypted data) set to a segment area to acquire a segment key.

The reproduction device A selects variation data that can be decrypted using the acquired segment key and reproduces the selected variation data.

Data which is not surrounded by [and] is data to an area other than the segment area and is data reproduced in common by all reproduction devices.

Reproduction devices that store different device keys can decrypt and reproduce different items of variation data in the segment area and different reproduction paths are set thereto.

A data identifier such as an identifier (for example, [AVxxx]) of variation data is embedded in the variation data set to a segment area in each reproduction path.

That is, by analyzing reproduced video data, it is possible to determine which variation data is reproduced.

With this determination process, as described with reference to Fig. 2, it is possible to determine the source of an illegal copy from an illegally copied content, for example.

In the present embodiment, each item of variation data includes a 192-byte source packet.

A reproduction device selects only one source packet from a plurality of source packets set to each segment area to decrypt the selected source packet and executes a reproduction process.

A reproduction device needs to select one reproduction target source packet according to the reproduction path thereof from each segment area.

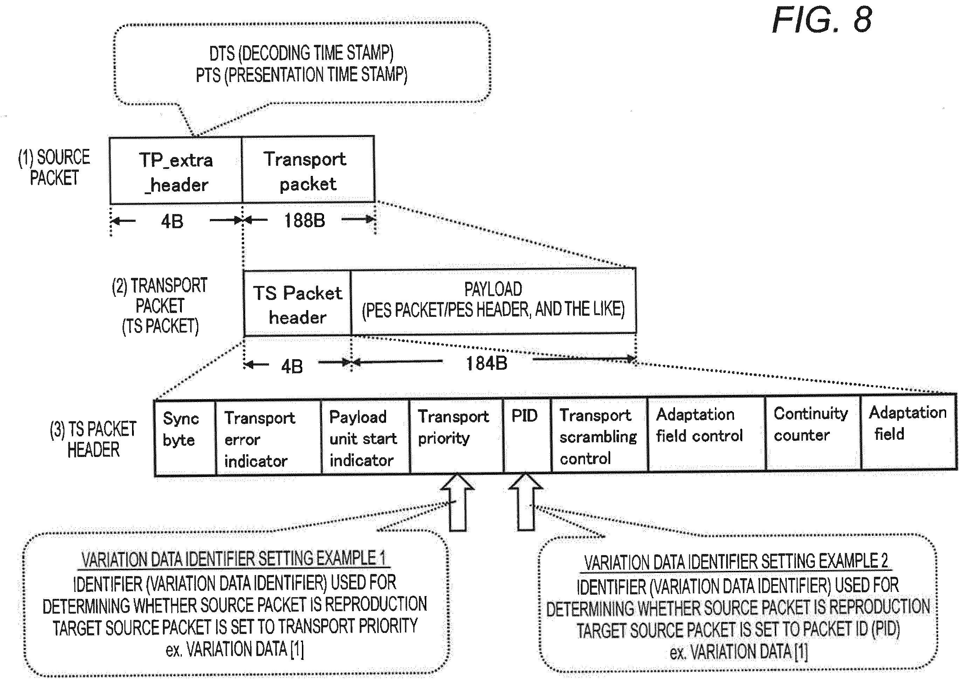

A setting example of a variation data identifier set to each source packet to be used for a source packet selection process will be described with reference to Figs. 8(1) to 8(3).

Figs. 8(1) to 8(3) illustrate the configuration of the following items of data.

(1) Source packet;
(2) Transport packet (TS packet); and

(3) TS packet header.

A 192-byte source packet illustrated in Fig. 8(1) corresponds to one item of variation data of the first embodiment.

As illustrated in Fig. 8(1), the 192-byte source packet includes a 4-byte header and a 188-byte transport packet (TS packet).

A decoding time stamp (DTS) indicating a decoding time of reproduction target data such as video data stored in a TS packet and a presentation time stamp (PTS) indicating a reproduction time are stored in the 4-byte header.

A reproduction device controls the timings of a decoding process and a reproduction process of the reproduction data stored in each source packet according to the DTS and the PTS.

Note that in the present embodiment, since the same reproduction data is stored in a plurality of items of variation data (that is, a plurality of source packets) set to one segment area, the DTS and the PTS stored in the header of these source packets are the same time stamps.

A reproduction device selects one source packet (variation data) from the plurality of source packets which is the plurality of items of variation data set to the segment area and reproduces the selected source packet.

A variation data identifier is used for this selection process.

A transport packet illustrated in Fig. 8(2) includes a 4-byte TS packet header and a 188-byte TS packet payload.

Reproduction target data (for example, video data or the like) is encrypted and stored in the TS packet payload.

Fig. 8(3) illustrates a detailed configuration of the TS packet header.

The variation data identifier can be set to the TS packet header.

Figs. 8(1) to 8(3) illustrate the following two data setting examples.

(a) Variation data identifier setting example 1

Variation data identifier setting example 1 is an example in which a variation data identifier with which it can be determined whether a packet is a reproduction target source packet is set to a transport priority setting field of the TS packet header.

Variation data [1]
Variation data [2]
:
Variation data [n]

Such a variation data identifier is stored in a transport priority setting field of the TS packet header.

(b) Variation data identifier setting example 2

Variation data identifier setting example 2 is an example in which a variation data identifier with which it can be determined whether a packet is a reproduction target source packet is set to a packet ID (PID) setting field of the TS packet header.

Variation data [1]
Variation data [2]
:
Variation data [n]

Such a variation data identifier is stored in a packet ID (PID) setting field of the TS packet header.

For example, the variation data identifier can be set to the TS packet header in this manner.

A reproduction device sequentially reads a plurality of source packets corresponding to a plurality of items of variation data set to the segment area, reads the variation data identifier set to the TS packet header of each source packet, and determines whether the source packet is a source packet that stores reproduction target data to be reproduced by the reproduction device.

This determination process requires the data of a variation data identifier corresponding to a reproduction path allocated to the reproduction device. This data can be obtained from a variation map table to be described later, for example.

The variation map table will be described later.

Furthermore, the identifier of a segment key to be used for decryption, for example, may be used as the variation data identifier. For example,
Segment key [0]
Segment key [1]
:
Segment key [N]

Any one of these segment key identifiers is stored in a transport priority setting field or a packet ID (PID) setting field as the variation data identifier.

A reproduction device can acquire partial segment keys from the segment key file stored in a disc together with content by a decryption process which uses the device key or the like stored in the reproduction device.

By selecting a source packet in which an identifier identical to the identifier of the acquirable segment key is stored in the transport priority setting field or the packet ID (PID) setting field of the source packet, it is possible to perform a decryption process and a reproduction process of the encrypted data stored in the source packet.

As described above, a reproduction device can select a source packet that stores decryptable data on the basis of the variation data identifier set to the TS packet header of the source packet. That is, it is possible to sequentially select source packets according to a specific path set in correspondence to the reproduction device and execute a decryption and reproduction process.

The key used for decryption is a segment key that is acquired from the segment key file and is a key that can be acquired from the segment key file by a decryption process which uses the device key or the like stored in the reproduction device.

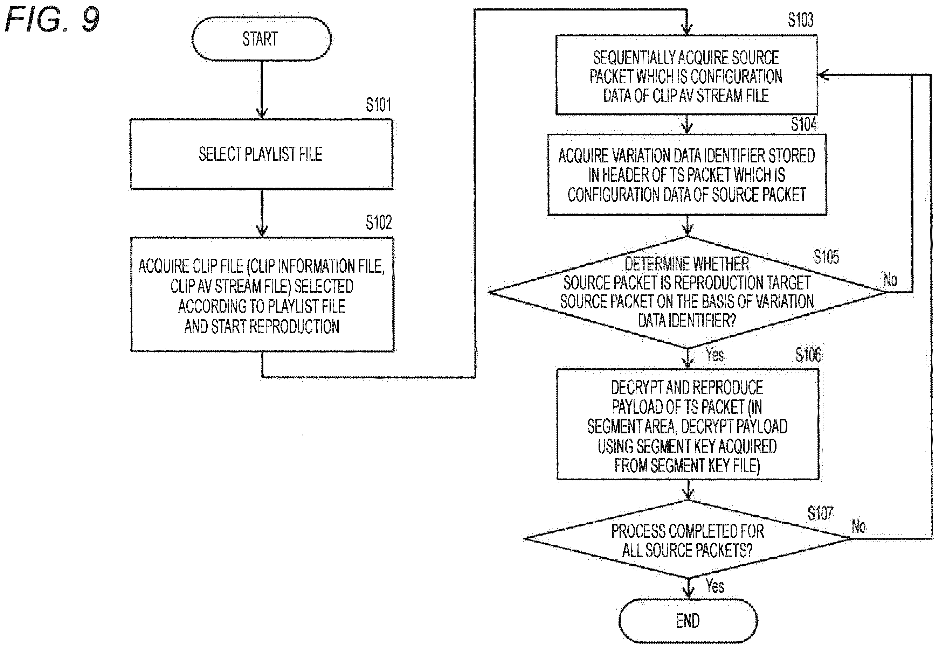

Next, a processing sequence executed by a reproduction device will be described with reference to the flowchart illustrated in Fig. 9.

The flowchart illustrated in Fig. 9 is a flowchart for describing a sequence of a process of reproducing content stored in a medium (for example, a disc such as a BD) mounted on a reproduction device.

The process according to the flowchart illustrated in Fig. 9 is executed according to a program stored in a storage unit of a reproduction device by a data processing unit of the reproduction device.

The data processing unit includes a CPU or the like that has a program execution function.

Hereinafter, the processes of the respective steps will be described sequentially.

(Step S101)

First, a data processing unit of a reproduction device acquires a playlist file which is a reproduction control information file for reproducing a reproduction target content designated by a user, for example.

Items of data according to the directory described with reference to Fig. 3 are stored in the disc that stores the reproduction target content.

The reproduction device selects a playlist file to be used for executing reproduction of a reproduction content designated by a user.

(Step S102)

Subsequently, in step S102, the reproduction device acquires a clip file (a clip information file or a clip AV stream file) selected according to the playlist file selected in step S101 to start a reproduction process.

As described above with reference to Figs. 3 and 4, the playlist file is correlated with a clip AV stream file or a clip information file that stores the reproduction target content.

The reproduction device acquires a clip file ((clip AV stream file) + (clip information file)) that stores the reproduction target content according to the description of the playlist file.

(Step S103)

Subsequently, in step S103, the reproduction device sequentially acquires a source packet which is configuration data of the clip AV stream file selected by the playlist file.

(Step S104)

Subsequently, in step S104, the reproduction device acquires a variation data identifier stored in the header of a TS packet which is the configuration data of the acquired source packet.

As described above with reference to Figs. 8(1) to 8(3), the variation data identifier is recorded in the header of the TS packet which is the configuration data of the source packet.

(Step S105)

In step S105, the reproduction device determines whether the variation data identifier indicates a reproduction target source packet (variation data) corresponding to the reproduction path of the source packet.

Note that this determination process can be performed on the basis of the data (for example, a variation map table to be described later) of the variation data identifier corresponding to the reproduction path allocated to the reproduction device. The variation map table will be described later.

When it is determined that the variation data identifier does not indicate the reproduction target source packet (variation data) corresponding to the reproduction path of the subject device, the flow returns to step S103, and the reproduction device acquires a subsequent source packet and executes the process of step S104 and later.

On the other hand, when it is determined in step S105 that the variation data identifier indicates a reproduction target source packet (variation data) corresponding to the reproduction path of the subject device (that is, when it is determined that the variation data identifier has a value indicating a source packet that stores reproduction data that can be decrypted using the segment key that the reproduction device can acquire), the flow proceeds to step S106.

(Step S106)

When it is determined in step S105 that the value of the variation data identifier indicates a reproduction target source packet (variation data) corresponding to the reproduction path of the subject device (that is, the value indicates a source packet that stores decryptable reproduction data), the reproduction device extracts a payload of a TS packet which is configuration data of the source packet in step S106. The encrypted data of the reproduction target data (for example, video data) is stored in the TS payload.

The reproduction device decrypts and reproduces the encrypted data stored in the TS payload.

Note that the key used for decryption is a segment key that is acquired from a segment key file when the variation data is the variation data of a segment area.

A CPS unit key is used when the data is the data of a single data area (non-segment area) other than the segment area.

The segment key is a key that can be acquired from a segment key file by using the device key or the like stored in the reproduction device.

(Step S107)

In step S107, the reproduction device determines whether processing has been completed for all source packets that constitute the reproduction target content. When there is a non-processed source packet, the flow returns to step S103, and the processes of step S103 and later are executed on the non-processed packet.

In step S107, when it is determined that processing has been completed for all source packets that constitute the reproduction target content, the process ends.

In the first embodiment, one item of variation data includes one source packet of 192 bytes.

Furthermore, a process of determining whether data can be reproduced by a reproduction device is performed on the basis of the variation data identifier set in the source packet.

As described above, in the first embodiment, as described with reference to Figs. 1(1) and 1(2) and the like, variation data is set in units of source packets having a small data amount rather than clip files.

With the configuration of the first embodiment (that is, the variation data is set in units of source packets), the following advantages are obtained.

(Advantage 1) Since the process of determining whether data can be reproduced by a reproduction device is performed on the basis of the variation data identifier set in the source packet and the variation data identifier is set, it is possible to set a larger number of reproduction paths.

In the configuration in which variation data is set in units of clip files described with reference to Figs. 1(1) and 1(2) and the like, since the reproduction path is set according to the playlist, although the number of reproduction paths is limited to an allowable number of playlist files (1024), such an upper limit does not exist in the first embodiment.

(Advantage 2) Since the data amount of the source packet which is the variation data is as small as 192 bytes, the occupancy of the recording area of the disc by the variation data can be suppressed.

In the configuration in which variation data is set in units of clip files described with reference to Figs. 1(1) and 1(2) and the like, since the data amount of the clip AV stream file or the clip information file which is one item of variation data is large, the occupancy of the recording area of the disc by the variation data increases.

(Advantage 3) In the first embodiment, during a reproduction process, a reproduction device sequentially reads source packets of the segment area, selects a packet in which the setting of the variation data identifier indicates that the packet can be reproduced, and reproduces the selected packet. Therefore, it is possible to perform the reproduction process without any jump.

In the configuration in which variation data is set in units of clip files described with reference to Figs. 1(1) and 1(2) and the like, since a clip file which is designated to be reproduced by the selected playlist file is selected and reproduced, jumping of a readout head is required, and a reproduction delay and a reproduction interruption may occur.

[2-3. (Second embodiment) Embodiment in which variation data is set in units of aligned units]

Next, an embodiment in which variation data is set in units of aligned units will be described as the second embodiment.

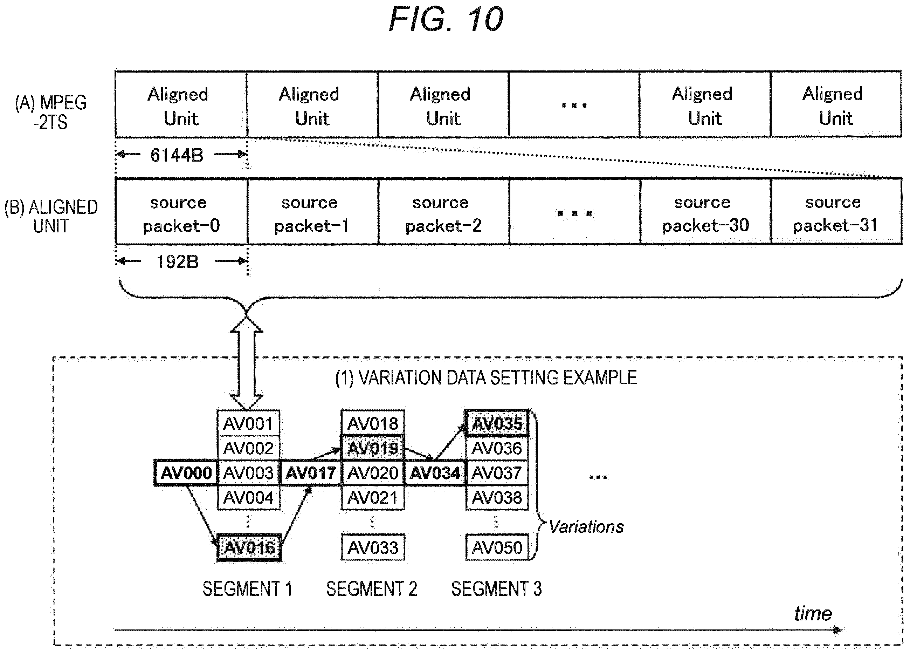

An example of a data configuration in which variation data is set in units of aligned units according to the second embodiment will be described with reference to Figs. 10(A), 10(B) and 10(1).

First, Figs. 10(A) and 10(B) illustrate the following configuration of a clip AV stream file that stores video data or the like as reproduction data described with reference to Figs. 5(A) to 5(E).

(A) An MPEG-2 TS file having a configuration in which a plurality of 6144-byte aligned units (Aligned Units) are arranged.

(B) An aligned unit (Aligned Unit) having a configuration in which a plurality of 192-byte source packets are arranged.

As illustrated in Figs. 10(A), 10(B) and 10(1), in the second embodiment, a 6144-byte aligned unit (Aligned Units) illustrated in Fig. 10 (B) is set as one item of variation data.

Fig. 10 (1) illustrates a variation data setting example.

A variation data setting example illustrated in Fig. 10 (1) has a configuration in which different reproduction paths are set depending on a reproduction device similarly to the configuration described with reference to Figs. 1(1) to 2. That is, a plurality of segment areas is set and a plurality of items of variation data which can be decrypted using different segment keys is set to each segment area in order to set different reproduction paths to respective reproduction devices.

However, in the configuration described with reference to Figs. 1(1) and 1(2), each item of variation data [AVxxx] is set to individual clip AV stream files. However, in the present embodiment, each item of variation data [AVxxx] is set to individual source packets.

That is, each item of variation data includes one aligned unit of 6144 bytes.

Items of variation data AV000, AV001, AV002, ..., and the like set to segment areas (segment 1 and the like) illustrated in Fig. 10 (1) are items of video data of a scene that constitutes a certain movie content, for example. Each of these items of variation data is configuration data of one aligned unit of 6144 bytes.

Items of video data corresponding to scenes reproduced sequentially are illustrated along a time axis (time) that progresses from left to right in the drawing.

For example, the first scene is AV000.

An aligned unit that stores sixteen items of video data (items of variation data) of AV001 to AV0016 is set as the subsequent data of the first aligned unit AV000.

These sixteen aligned units store data corresponding to the same scene. However, the items of video data stored in the sixteen aligned units AV001 to AV0016 are encrypted using different keys (segment keys).

Each reproduction device can acquire a segment key from a segment key file stored in a disc together with content using the key (device key) stored in the subject device.

However, the segment key which can be acquired using the device key stored in one reproduction device can decrypt only one item of variation data included in a plurality of items of variation data (for example, AV001 to AV016) set to one segment area (for example, segment 1).

A reproduction device selects one item of decryptable variation data from one segment area using the segment key obtained from the segment key file and performs a decryption process to reproduce content.

An area to which only one item of data is set other than the segment area is a single data area (non-segment area). For example, only one item of data is set to a reproduction area such as AV000 and AV017. In the single data area, all reproduction devices reproduce only one item of common data.

These items of data are reproduced by decrypting the same using a CPS unit key.

A segment key which is a key for decrypting variation data can be acquired from a segment key file stored in a disc together with a reproduction target content, for example.

However, the segment keys stored in the segment key file are encrypted individually, and the reproduction device can acquire partial segment keys by a decryption process which uses the device key or the like stored in the reproduction device.

A segment key that one reproduction device can acquire is a key which can decrypt only one item of variation data among a plurality of items of variation data set to the segment area.

A reproduction device acquires a segment key that can be acquired from a segment key file sequentially for each segment area and decrypts one item of variation data using the acquired segment key to execute a reproduction process.

In this manner, each reproduction device selects one item of decryptable variation data from one segment area to perform a reproduction process.

Reproduction devices that store different device keys execute reproduction processes according to different reproduction paths.

The example illustrated in Fig. 10(1) illustrates a reproduction path of a reproduction device A.

The reproduction device A sequentially reproduces the following items of data.

AV000 → [AV016] → AV017 → [AV019] → AV034 → [AV035]

This is the reproduction path A of the reproduction device A.

Note that in these items of reproduction data, data surrounded by [and] like [AVxxx] is the variation data set to each segment area.

The reproduction device A decrypts an encryption segment key stored in the segment key file using a key (a device key) or the like possessed by the reproduction device A from sixteen items of variation data (items of encrypted data) set to a segment area to acquire a segment key.

The reproduction device A selects variation data that can be decrypted using the acquired segment key and reproduces the selected variation data.

Data which is not surrounded by [and] is data to an area other than the segment area and is data reproduced in common by all reproduction devices.

Reproduction devices that store different device keys can decrypt and reproduce different items of variation data in the segment area and different reproduction paths are set thereto.

A data identifier such as an identifier (for example, [AVxxx]) of variation data is embedded in the variation data set to a segment area in each reproduction path.

That is, by analyzing reproduced video data, it is possible to determine which variation data is reproduced.

With this determination process, as described with reference to Fig. 2, it is possible to determine the source of an illegal copy from an illegally copied content, for example.

In the present embodiment, each item of variation data includes a 6144-byte aligned unit.

The reproduction device selects only one aligned unit from a plurality of aligned units set to each segment area to decrypt the selected aligned unit and executes a reproduction process.

The reproduction device needs to select one reproduction target source packet according to the reproduction path thereof from each segment area.

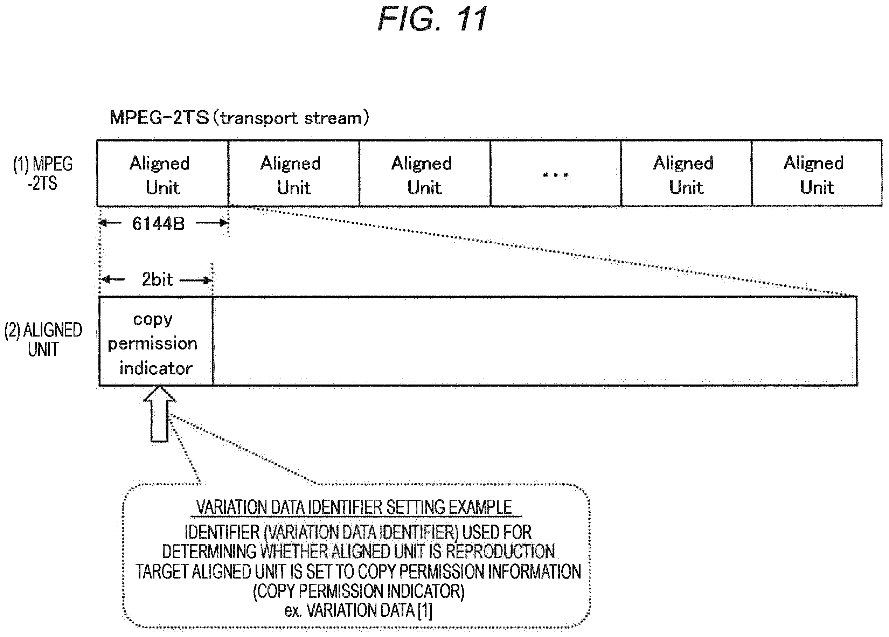

A setting example of a variation data identifier set to each aligned unit to be used for an aligned unit selection process will be described with reference to Figs. 11(1) and 11(2).

Figs. 11(1) and 11(2) illustrate the configuration of the following items of data.

    (1) MPEG-2 TS file; and
    (2) Aligned unit.

The 6144-byte aligned unit illustrated in Fig. 11(2) corresponds to one item of variation data of the second embodiment.

As illustrated in Fig. 11(2), a 2-bit copy permission information setting portion (copy permission indicator) is provided in the 6144-byte aligned unit.

The variation data identifier can be recorded in the copy permission information setting portion (copy permission indicator).

That is, a variation data identifier with which it can be determined whether an aligned unit is a reproduction target aligned unit is set to the copy permission information setting portion (copy permission indicator).

Variation data [1]

Variation data [2]

:

Variation data [n]

Such a variation data identifier is stored in the copy permission information setting portion (copy permission indicator) set to the aligned unit.

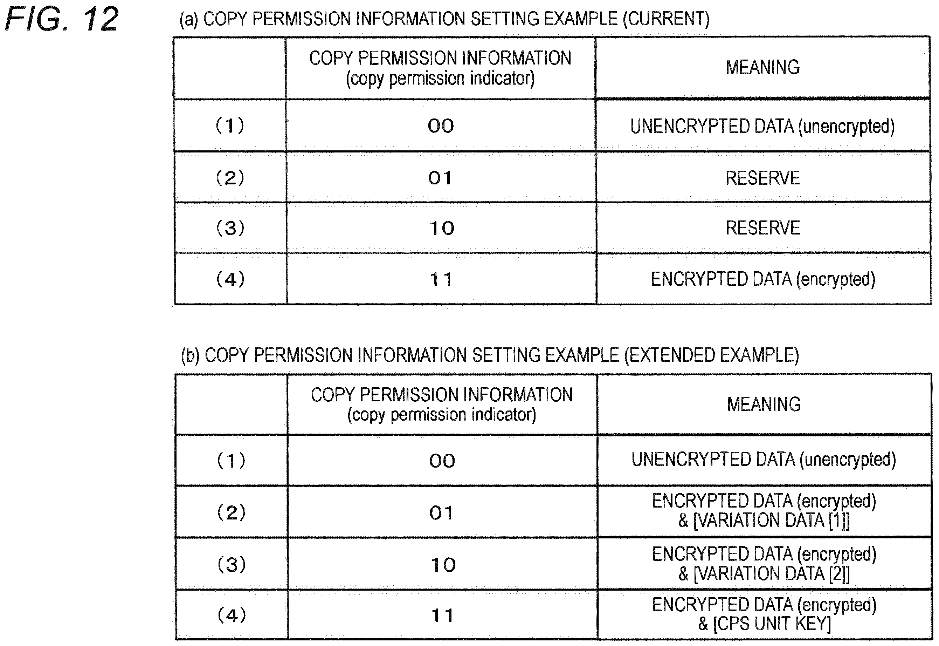

An example in which a variation data identifier with which it can be determined whether an aligned unit is a reproduction target aligned unit is set to the copy permission information setting portion (copy permission indicator) will be described with reference to Figs. 12(a) and 12(b).

Fig. 12(a) is a diagram illustrating an example of a bit value set to the conventional copy permission information setting portion.

For example, when a set bit value is 00, it indicates that the reproduction target data stored in this aligned unit is unencrypted data (unencrypted).

Moreover, when a set bit value is 11, it indicates that the reproduction target data stored in this aligned unit is encrypted data (encrypted).

The other bit values 01 and 10 are not defined and are not used.

Fig. 12(b) illustrates an example in which a variation data identifier with which it can be determined whether an aligned unit is a reproduction target aligned unit is set to the copy permission information setting portion (copy permission indicator) according to the present embodiment.

The respective bit values are defined as follows.

When the set bit value is 00, it indicates that the reproduction target data stored in this aligned unit is unencrypted data (unencrypted).

Moreover, when the set bit value is 11, it indicates that the reproduction target data stored in this aligned unit is encrypted data (encrypted).

These set bit values are similar to the conventional ones.

Furthermore, when the set bit value is 01, it indicates that the reproduction target data stored in this aligned unit is encrypted data (encrypted) and is one item of variation data set to the segment area and is encrypted data corresponding to the variation data identifier of Variation data [1].

When the set bit value is 10, it indicates that the reproduction target data stored in this aligned unit is encrypted data (encrypted) and is one item of variation data set to the segment area and is encrypted data corresponding to the variation data identifier of Variation data [2].

For example, it is possible to set the variation data identifier to the copy permission information setting field of the aligned unit in this manner.

A reproduction device sequentially reads a plurality of aligned units corresponding to a plurality of items of variation data set to the segment area and determines whether the aligned unit is an aligned unit that stores reproduction target data to be reproduced by the reproduction device on the basis of the setting of the variation data identifier set to the copy permission information setting field of each aligned unit.

Note that this determination process requires the data of a variation data identifier corresponding to a reproduction path allocated to the reproduction device. This data can be obtained from a variation map table to be described later, for example.

The variation map table will be described later.

Furthermore, the identifier of a segment key to be used for decryption, for example, may be used as the variation data identifier. For example,

Segment key [0]
Segment key [1]
:
Segment key [N]

Any one of these segment key identifiers is recorded in a copy permission information setting portion (copy permission indicator) of the aligned unit as the variation data identifier.

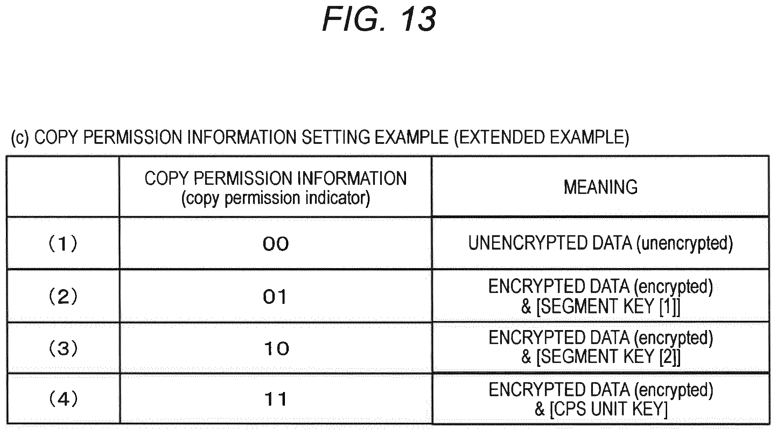

The recording example is illustrated in Fig. 13(c).

When the set bit value is 01, it indicates that the reproduction target data stored in this aligned unit is encrypted data (encrypted) and is one item of variation data set to the segment area and is encrypted data that can be decrypted using segment key [0].

When the set bit value is 10, it indicates that the reproduction target data stored in this aligned unit is encrypted data (encrypted) and is one item of variation data set to the segment area and is encrypted data that can be decrypted using segment key [1].

A reproduction device can acquire partial segment keys from the segment key file stored in a disc together with content by a decryption process which uses the device key or the like stored in the reproduction device.

By selecting an aligned unit in which an identifier identical to the identifier of the acquirable segment key is stored in the copy permission information setting portion (copy permission indicator) of the aligned unit, it is possible to perform a decryption process and a reproduction process of the encrypted data stored in the aligned unit.

As described above, a reproduction device can select a aligned unit that stores decryptable data on the basis of the variation data identifier set to the aligned unit. That is, it is possible to sequentially select aligned units according to a specific path set in correspondence to the reproduction device and execute a decryption and reproduction process.

The key used for decryption is a segment key that is acquired from the segment key file and is a key that can be acquired from the segment key file by a decryption process which uses the device key or the like stored in the reproduction device.

As described with reference to Figs. 11(1) to 13(c), it is possible to set the variation data identifier to the copy permission information setting field of the aligned unit.

A reproduction device sequentially reads a plurality of aligned units corresponding to a plurality of items of variation data set to the segment area and determines whether the aligned unit is an aligned unit that stores the reproduction target data to be reproduced by the reproduction device on the basis of the variation data identifier set to the copy permission information setting field of each aligned unit.

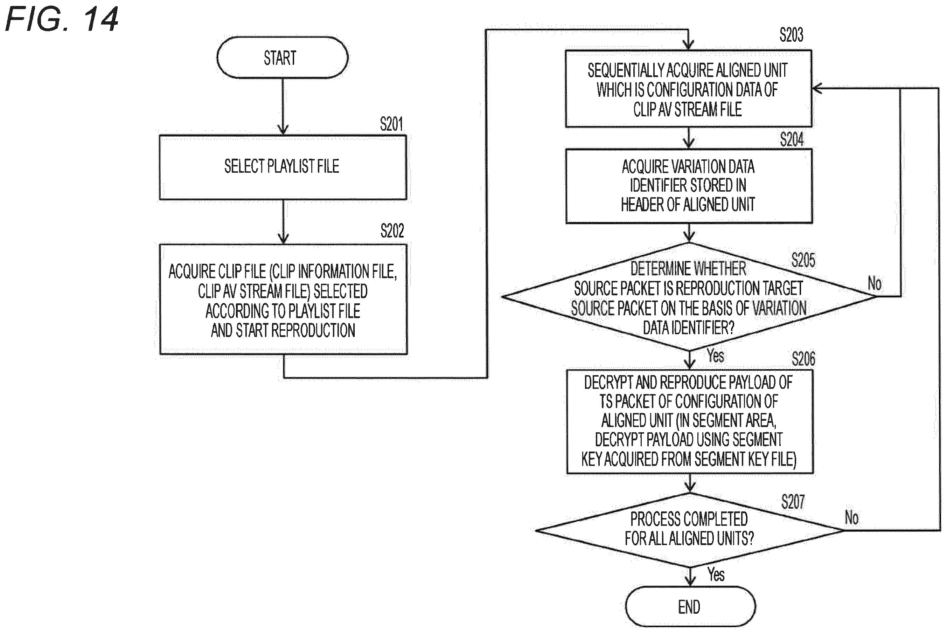

Next, a processing sequence executed by a reproduction device will be described with reference to the flowchart illustrated in Fig. 14.

The flowchart illustrated in Fig. 14 is a flowchart for describing a sequence of a process of reproducing content stored in a medium (for example, a disc such as a BD) mounted on a reproduction device.

The process according to the flowchart illustrated in Fig. 14 is executed according to a program stored in a storage unit of a reproduction device by a data processing unit of the reproduction device.

The data processing unit includes a CPU or the like that has a program execution function.

Hereinafter, the processes of the respective steps will be described sequentially.

(Step S201)

First, a data processing unit of a reproduction device acquires a playlist file which is a reproduction control information file for reproducing a reproduction target content designated by a user, for example.

Items of data according to the directory described with reference to Fig. 3 are stored in the disc that stores the reproduction target content.

The reproduction device selects a playlist file to be used for executing reproduction of a reproduction content designated by a user.

(Step S202)

Subsequently, in step S202, the reproduction device acquires a clip file (a clip information file or a clip AV stream file) selected according to the playlist file selected in step S201 to start a reproduction process.

As described above with reference to Figs. 3 and 4, the playlist file is correlated with a clip AV stream file or a clip information file that stores the reproduction target content.

The reproduction device acquires a clip file ((clip AV stream file) + (clip information file)) that stores the reproduction target content according to the description of the playlist file.

(Step S203)

Subsequently, in step S203, the reproduction device sequentially acquires an aligned unit which is configuration data of the clip AV stream file selected by the playlist file.

(Step S204)

Subsequently, in step S204, the reproduction device acquires a variation data identifier stored in the copy permission information setting field of the acquired aligned unit.

As described above with reference to Figs. 11 (1) to 13(c), the variation data identifier is recorded in the copy permission information setting field which is the configuration data of the aligned unit.

(Step S205)

In step S205, the reproduction device determines whether the variation data identifier indicates a reproduction target aligned unit (variation data) corresponding to the reproduction path of the subject device.

This determination process can be performed on the basis of the data (for example, a variation map table to be described later) of the variation data identifier corresponding to the reproduction path allocated to the reproduction device. The variation map table will be described later.

When it is determined that the variation data identifier does not indicate the reproduction target aligned unit (variation data) corresponding to the reproduction path of the subject device, the flow returns to step S203, and the reproduction device acquires a subsequent aligned unit and executes the process of step S204 and later.

On the other hand, when it is determined in step S205 that the variation data identifier indicates a reproduction target aligned unit (variation data) corresponding to the reproduction path of the subject device (that is, when it is determined that the variation data identifier has a value indicating an aligned unit that stores reproduction data that can be decrypted using the segment key that the reproduction device can acquire), the flow proceeds to step S206.

(Step S206)

When it is determined in step S205 that the value of the variation data identifier indicates a reproduction target aligned unit (variation data) corresponding to the reproduction path of the subject device (that is, the value indicates an aligned unit that stores decryptable reproduction data), the reproduction device extracts a payload of a TS packet from the configuration data of the aligned unit in step S206. The encrypted data of the reproduction target data (for example, video data) is stored in the TS payload.

The reproduction device decrypts and reproduces the encrypted data stored in the TS payload.

The key used for decryption is a segment key that is acquired from a segment key file when the variation data is the variation data of a segment area.

A CPS unit key is used when the data is the data of a single data area (non-segment area) other than the segment area.

The segment key is a key that can be acquired from a segment key file by using the device key or the like stored in the reproduction device.

(Step S207)

In step S207, the reproduction device determines whether processing has been completed for all aligned units that constitute the reproduction target content. When there is a non-processed aligned unit, the flow returns to step S203, and the processes of step S203 and later are executed on the non-processed aligned unit.

In step S207, when it is determined that processing has been completed for all aligned units that constitute the reproduction target content, the process ends.

In the second embodiment, one item of variation data includes one aligned unit of 6144 bytes.

Furthermore, a process of determining whether data can be reproduced by a reproduction device is performed on the basis of the data set in the aligned unit.

As described above, in the second embodiment, as described with reference to Figs. 1(1) and 1(2) and the like, variation data is set in units of aligned units having a small data amount rather than clip files.

With the configuration of the second embodiment (that is, the variation data is set in units of aligned units), the following advantages are obtained.

(Advantage 1) Since the process of determining whether data can be reproduced by a reproduction device is performed on the basis of the variation data identifier set in the aligned unit and the variation data identifier is set, it is possible to set a larger number of reproduction paths.

In the configuration in which variation data is set in units of clip files described with reference to Figs. 1(1) and 1(2) and the like, since the reproduction path is set according to the playlist, although the number of reproduction paths is limited to an allowable number of playlist files (1024), such an upper limit does not exist in the second embodiment.

(Advantage 2) Since the data amount of the aligned unit which is the variation data is as small as 6144 bytes, the occupancy of the recording area of the disc by the variation data can be suppressed.

In the configuration in which variation data is set in units of clip files described with reference to Figs. 1(1) and 1(2) and the like, since the data amount of the clip AV stream file or the clip information file which is one item of variation data is large, the occupancy of the recording area of the disc by the variation data increases.

(Advantage 3) In the first embodiment, during a reproduction process, a reproduction device sequentially reads aligned units of the segment area, selects an aligned unit in which the setting of the variation data identifier indicates that the aligned unit can be reproduced, and reproduces the selected aligned unit. Therefore, it is possible to perform the reproduction process without any jump.

In the configuration in which variation data is set in units of clip files described with reference to Figs. 1(1) and 1(2) and the like, since a clip file which is designated to be reproduced by the selected playlist file is selected and reproduced, jumping of a readout head is required, and a reproduction delay and a reproduction interruption may occur.

[3. Various configurations suitable for variation data setting illustrated in Embodiments 1 and 2]

As described above, in the configuration of the present disclosure, the variation data set to the segment area has a 192-byte source packet or a 6144-byte aligned unit, and variation data having a small data size is set unlike the conventional technique in which one clip file is set as variation data.

Hereinafter, various configurations suitable for Embodiments 1 and 2 in which such variation data having a small data size is set.

[3-1. Configuration of segment key file]

First, a configuration of the segment key file will be described.

As described above with reference to Fig. 3 and the like, the segment key file is an encryption key file recorded on a disc that stores content.

Each reproduction device can acquire a segment key from a segment key file stored in a disc together with the content using a key (a device key) or the like stored in the subject device.

However, the segment key that can be acquired using the device key stored in one reproduction device is only one segment key for each segment area.

That is, each reproduction device can acquire a segment key capable of decrypting one item of variation data among a plurality of items of variation data of each segment area.

A combination of segment keys that can be acquired from a segment key file has a different setting depending on a device key stored in the reproduction device.

The reproduction device selects one item of decryptable variation data from one segment area using the segment key obtained from the segment key file to decrypt and reproduce the selected variation data.

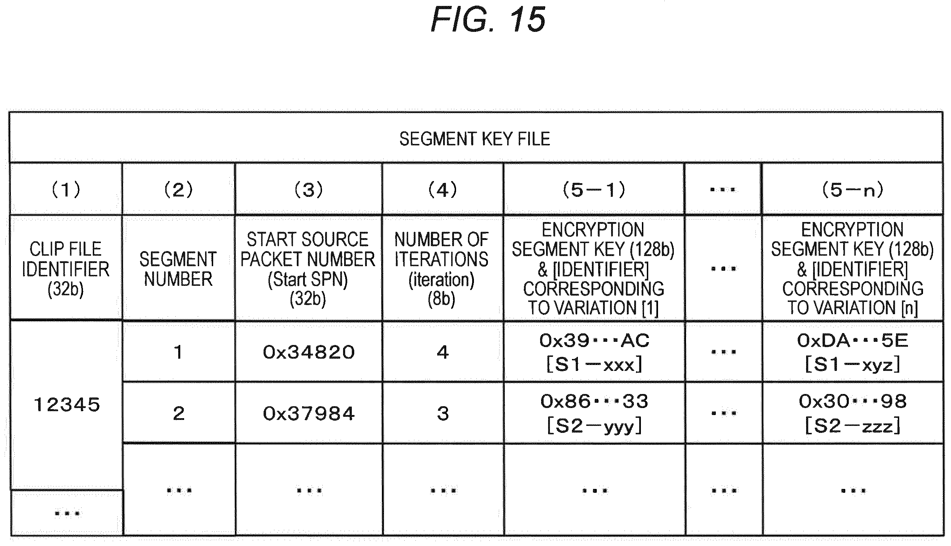

Fig. 15 illustrates a configuration example of a segment key file.

As illustrated in Fig. 15, the following respective items of data are stored in the segment key file.

(1) Clip file identifier
(2) Segment number
(3) Start source packet number (Start SPN)
(4) Set number of iterations (Iteration)
(5-1 to 5-n) Encryption segment key & Identifier (Variation 1 to n) corresponding to variation

A clip file identifier is a clip file selected on the basis of a playlist file selected according to a title corresponding to a reproduction target content selected by a user, for example.

The clip file includes a clip AV stream file and a clip information file. For example, when a value 12345 is set as the clip file identifier, 12345.m2ts is selected as a clip AV stream file and 12345.clpi is selected as a clip information file.

Video data or the like which is reproduction target data is stored in the clip AV stream file. The video data is stored as the MPEG-2 TS-format data described above with reference to Figs. 5(A) to 5(E).

As illustrated in Fig. 15, one clip file (a clip AV stream file and a clip information file) is correlated with the segment key file and a plurality of segment keys corresponding to a plurality of segments are stored in the segment key file.

(2) The segment number is an identifier of a segment that is set to one clip file.
For example, the segment number corresponds to the segment identification information such as segment 1, 2, 3, and the like illustrated in the variation data setting example illustrated in Figs. 7(1) and 10(1).
(3) The start source packet number (Start SPN) is a source packet identifier for identifying a source packet at the start position of each segment area.
(4) The number of iterations (Iteration) is the number of items of variation data (source packets or aligned units) belonging to one variation in one segment.

In the first embodiment described above, although variation data is set in units of source packets, one source packet has a data size as small as 192 bytes.

Therefore, when the data amount of embedded data is large, for example, it may be difficult to embed data in only one source packet. In order to solve this problem, embedded data is recorded using a plurality of source packets.

Similarly, in the second embodiment, although variation data is set in units of aligned units, one aligned unit has a data size as small as 6144 bytes.

Therefore, when the data amount of embedded data is large, for example, it may be difficult to embed data in only one aligned unit. In order to solve this problem, embedded data is recorded using a plurality of aligned units.

Embedded data is embedded in video data or the like using a technique such as digital watermark or the like, for example.

As described above with reference to Fig. 2, it is possible to read the embedded data by analyzing video to determine the source.

A number of items of variation data corresponding to the number set to the number of iterations (Iteration) of the segment key file illustrated in Fig. 15 can be decrypted using one segment key.

A data processing unit of the reproduction device decrypts a number of items of variation data corresponding to the number set as the number of iterations using one segment key acquired from the segment key file.

(5-1 to 5-n) The encryption segment key & identifier (variation 1 to n) corresponding to the variation is a field that stores an encryption segment key that encrypts a segment key to be used for decrypting the variation data set to each segment and the identifier thereof.

This example of the segment key file corresponds to an example in which n items of variation data are set to one segment.

As described above, the encryption segment key can be decrypted by data processing which uses the device key or the like stored in the reproduction device.

However, one reproduction device can acquire only one segment key from one segment.

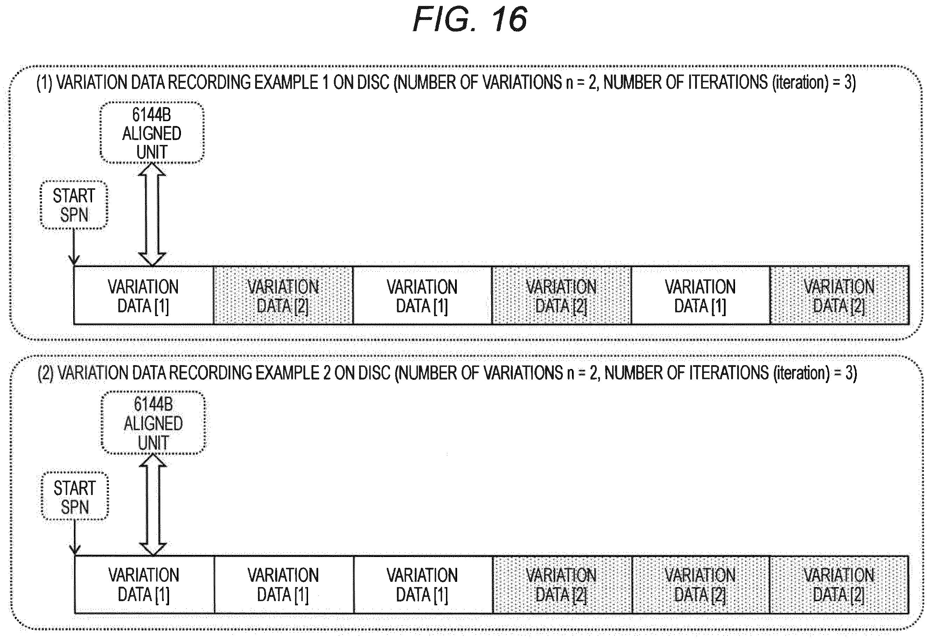

The following respective items of data set to the segment key file of Fig. 15 will be described in further with reference to Figs. 16(1) and 16(2).

(3) Start source packet number (Start SPN)
(4) Set number of iterations (Iteration)

Figs. 16(1) and 16(2) illustrate two arrangement examples of variation data recorded on a disc.

Figs. 16(1) and 16(2) illustrate a recording example of variation data corresponding to one segment area.

Note that the number of variations (n) set to one segment area is set to n = 2 (that is, two types of variation data are set).

Moreover, the number of iterations is set to 3 in Figs. 16(1) and 16(2).

For example, in Fig. 16(1), variation data [1] and variation data [2] are alternately recorded three times.

Each of one item of variation data [1] and one item of variation data [2] corresponds to one source packet (192 bytes) in the setting of the first embodiment.

Each of one item of variation data [1] and one item of variation data [2] corresponds to one aligned unit (6144 bytes) in the setting of the second embodiment.

The start source packet number (Start SPN) is an identifier of a source packet at the start position of a segment area.

A reproduction device can determine that the source packet is the start position of the segment area on the basis of the identifier of the source packet.

A reproduction device sequentially acquires items of variation data present in a segment area that starts from the start SPN, selects only variation data that can be decrypted using a segment key that the subject device can acquire, and decrypts and reproduces the selected variation data.

In the arrangement of items of variation data illustrated in Fig. 16(2), three items of variation data [1] are arranged successively and subsequently, three items of variation data [2] are arranged successively.

As described above, items of variation data can be recorded on the disc in various manners.

[3-2. Variation map table]

The variation data which the reproduction device selects and reproduces from each segment area is selected using the variation data identifier as described above with reference to Figs. 8(1) to 8(3) and Figs. 11(1) to 13(c).

This variation data selection process requires the data of the variation data identifier corresponding to the reproduction path allocated to the reproduction device. A variation map table that records the reproduction target variation data information corresponding to the reproduction path will be described.

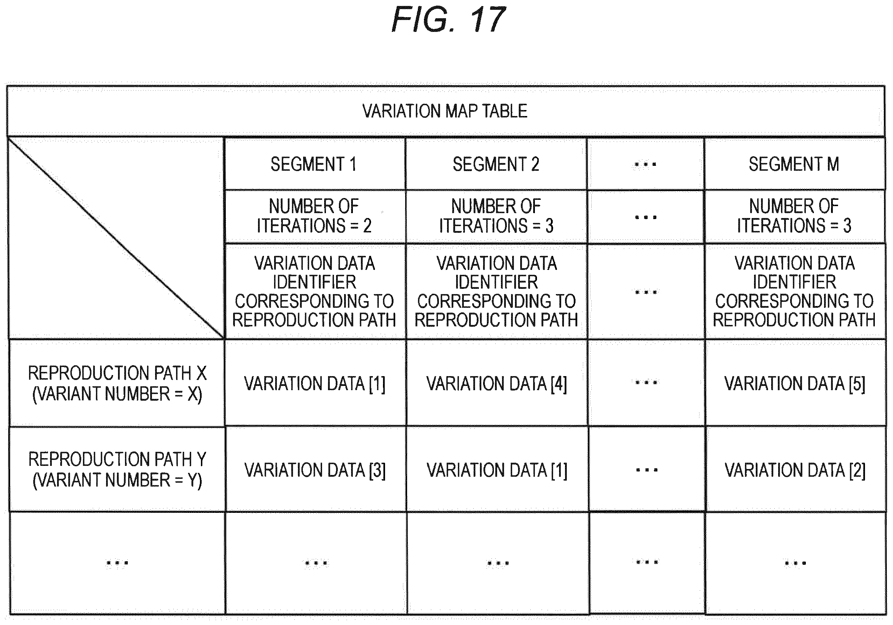

Fig. 17 illustrates a configuration example of a variation map table.

This variation map table is stored in a disc together with content as one of items of management data corresponding to a reproduction target content.

The variation map table illustrated in Fig. 17 is a table in which an identifier of variation data to be reproduced by the reproduction device to which reproduction paths (X, Y, ...) are set is recorded for each of segment areas (segments 1 to M).

For example, a reproduction device that executes a reproduction process according to reproduction path X executes a variation data selection process as below.

For segment 1, variation data corresponding to variation data identifier [1] is selected and reproduced;
For segment 2, variation data corresponding to variation data identifier [4] is selected and reproduced;
:
For segment M, variation data corresponding to variation data identifier [5] is selected and reproduced.

Moreover, a reproduction device that executes a reproduction process according to reproduction path Y executes a variation data selection process as below.

For segment 1, variation data corresponding to variation data identifier [3] is selected and reproduced;
For segment 2, variation data corresponding to variation data identifier [1] is selected and reproduced;
:
For segment M, variation data corresponding to variation data identifier [2] is selected and reproduced.

In this manner, the reproduction device can understand variation data that is to be reproduced in each segment area by referring to the variation map table illustrated in Fig. 17.

Note that a reproduction path (reproduction paths X, Y, ...) according to which a reproduction device performs reproduction can be understood on the basis of data (variant number) calculated according to a predetermined algorithm using the device key stored in the reproduction device.

For example, when a certain reproduction device has calculated a variant number X by computation using the device key thereof, the reproduction device can determine that the reproduction path allocated thereto is the reproduction path X.

Moreover, a segment key identifier may be recorded as the variation data identifier recorded in the variation map table.

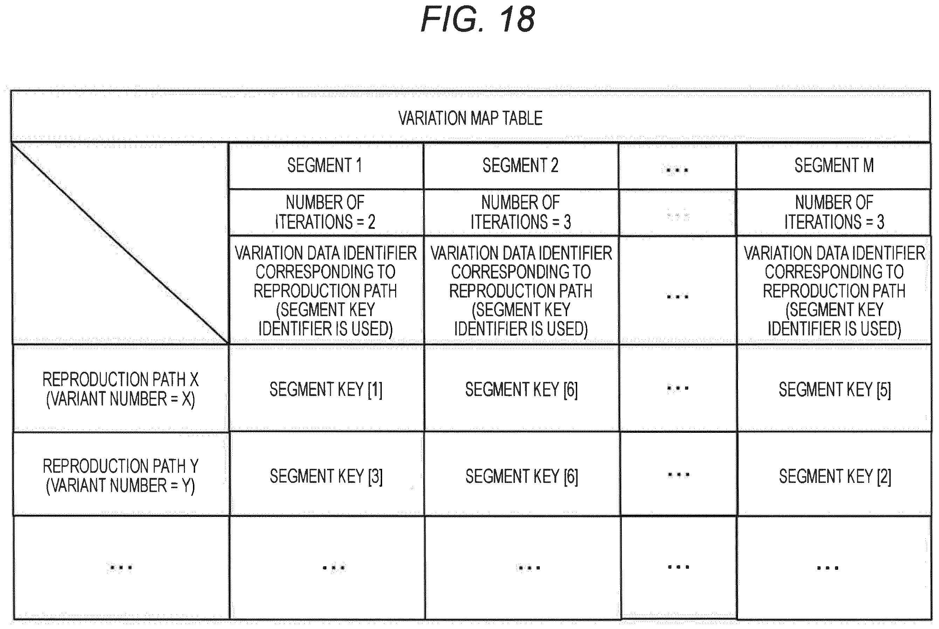

A configuration example of a variation map table that records the segment key identifier is illustrated in Fig. 18.

The variation map table illustrated in Fig. 18 is a table in which a segment key identifier which is the identifier of a segment key used for decryption of variation data is recorded for each of segment areas (segments 1 to M) as the variation data identifier that the reproduction device to which reproduction paths (X, Y, ...) are set.

The variation map table illustrated in Fig. 18 is a map used when the segment key identifier is recorded in the TS header of a source packet or a copy permission information recording field of an aligned unit as described above with reference to Figs. 8(1) to 8(3), Fig. 13(c), and the like, for example.

For example, a reproduction device that executes a reproduction process according to reproduction path X executes a variation data selection process as below.

For segment 1, variation data to which segment key identifier [1] is set is selected and the variation data is decrypted and reproduced using segment key [1];

For segment 2, variation data to which segment key identifier [4] is set is selected and the variation data is decrypted and reproduced using segment key [4];

:

For segment M, variation data to which segment key identifier [5] is set is selected and the variation data is decrypted and reproduced using segment key [5].

Moreover, a reproduction device that executes a reproduction process according to reproduction path Y executes a variation data selection process as below.

For segment 1, variation data to which segment key identifier [3] is set is selected and the variation data is decrypted and reproduced using segment key [3];

For segment 2, variation data to which segment key identifier [6] is set is selected and the variation data is decrypted and reproduced using segment key [6];

:

For segment M, variation data to which segment key identifier [2] is set is selected and the variation data is decrypted and reproduced using segment key [2].

[3-3. Configuration in which reproduction target variation data can be selected using variant number]

As described above, by recording the variation map table illustrated in Figs. 17 to 18 on a disc together with content, a reproduction device can understand variation data that is to be reproduced in each segment area by referring to the variation map table.

However, the variation map table illustrated in Figs. 17 to 18 records all items of path information corresponding to all paths. Therefore, there is a problem that the data amount increases when the number of segment areas or the number of items of variation data increases.

Next, a configuration in which a reproduction device can understand variation data that is to be reproduced in each segment area without using such a variation map table illustrated in Figs. 17 to 18 will be described.

As described above, a reproduction device can understand a reproduction path (reproduction path X, Y, ...) allocated to the subject device on the basis of data (variant number) calculated according to a predetermined algorithm using the device key stored in the reproduction device.

For example, when a certain reproduction device has calculated a variant number X by computation using the device key thereof, the reproduction device can determine that the reproduction path allocated thereto is the reproduction path X.

A configuration in which variation data to be selected in each segment can be understood using a constituent bit of the variant number (Variant Number) will be described.

For example, a case in which the following two items of variation data, i.e., two-division variation data are set to each segment area will be described.

Variation data [0]; and
Variation data [1].

Variation data that is to be selected according to a reproduction path is determined using a bit string of the variant number that each reproduction device calculates to check the reproduction path.

For example, it is assumed that the variant number that a certain reproduction device has calculated using the device key thereof or the like is the following 10-bit data.

Variant number=0110111101

The constituent bit of this calculated value is used as the variation data identifier as it is.

That is,

For segment 1, variation data [0] is selected according to the first bit [0] of the variant number.
For segment 2, variation data [1] is selected according to the second bit [1] of the variant number.
For segment 3, variation data [1] is selected according to the first bit [1] of the variant number.

The same is repeated for the subsequent segment.

For the eleventh and subsequent segments, bit values are sequentially acquired from the first bit of the variant number, and the variation data having the variation data identifier corresponding to the acquired bit value is selected.

Next, a case in which the following four items of variation data, i.e., four-division variation data are set to each segment area will be described.

Variation data [0];
Variation data [1];
Variation data [2]; and
Variation data [3].

Variation data that is to be selected according to a reproduction path is determined using a bit string of the variant number that each reproduction device calculates to check the reproduction path.

For example, it is assumed that the variant number that a certain reproduction device has calculated using the device key thereof or the like is the following 10-bit data.

Variant number=0110111101

Two bits of the constituent bits of this calculated value are extracted from the starting bit and are used as the variation data identifier.

That is, it is regarded that 2-bit data (00 to 11) indicates the value of an identifier (0 to 3) of the variation data. That is, the following correlation is defined.

00=0

01=1

10=2

11=3

For segment 1, variation data [1] is selected according to two bits [01] from the start of the variant number.

For segment 2, variation data [2] is selected according to the third to fourth bits [10] of the variant number.

For segment 3, variation data [3] is selected according to the fifth to sixth bits [11] of the variant number.

The same is repeated for the subsequent segment.

For the sixth and subsequent segments, bit values are sequentially acquired from the first bit of the variant number, and the variation data having the variation data identifier corresponding to the acquired bit value is selected.

When the variant number is 10-bit data as described above, it is possible to set 1024 reproduction paths only.

With this method, it is not possible to increase the number of settable reproduction paths.

As a countermeasure, predetermined computation (for example, computation which uses a hash function or the like) may be executed on the 10-bit variant data to use a variant number of which the bit length is extended.

Data (for example, 20-bit data) having an extended bit value may be used as a variant number serving as a reproduction path identifier.

[3-4. Configuration of EP map]

As described above with reference to Fig. 4, a playlist has information indicating an access point corresponding a reproduction start position or a reproduction end position of a clip (Clip) using a time stamp which is information on the time axis.

The clip information file (Clip Information file) is used for finding address information at which decoding of a stream in the clip AV stream file is to start from the time stamp.

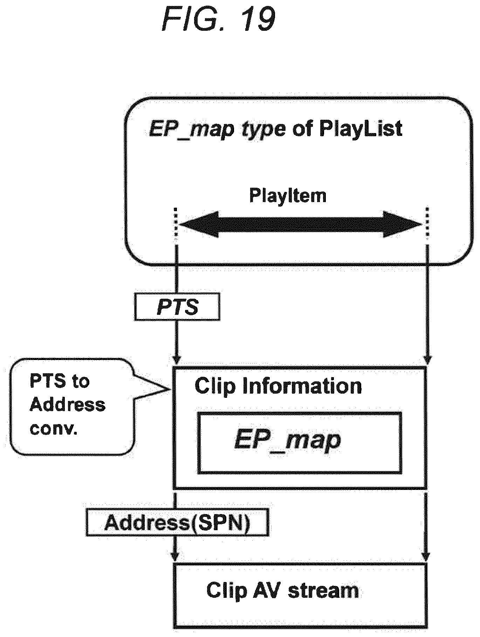

Moreover, the clip information file (Clip Information file) has an EP map (EP_map) illustrated in Fig. 19.

The EP map records access point information corresponding to a reproduction start position or a reproduction end position at which reproduction can start randomly, in the reproduction data stored in the clip AV stream file.

That is, correlation data between a time stamp that represents a reproduction start position on the time axis and address information for acquiring a packet corresponding to packet position information is recorded in the EP map.

Specifically, the EP map has the following items of correlation information:

(a) Time stamp (PTS: Presentation Time Stamp) that represents an access point on the time axis; and
(b) Source packet number (SPN) corresponding to an address indicating the access point using a packet position in a clip AV stream.

By referring to the EP map having such correlation information, it is possible to acquire a corresponding address (SPN) on the basis of the time stamp and to find a decoding start point or the like which is a reproduction start position in an AV stream, for example, according to the address (SPN).

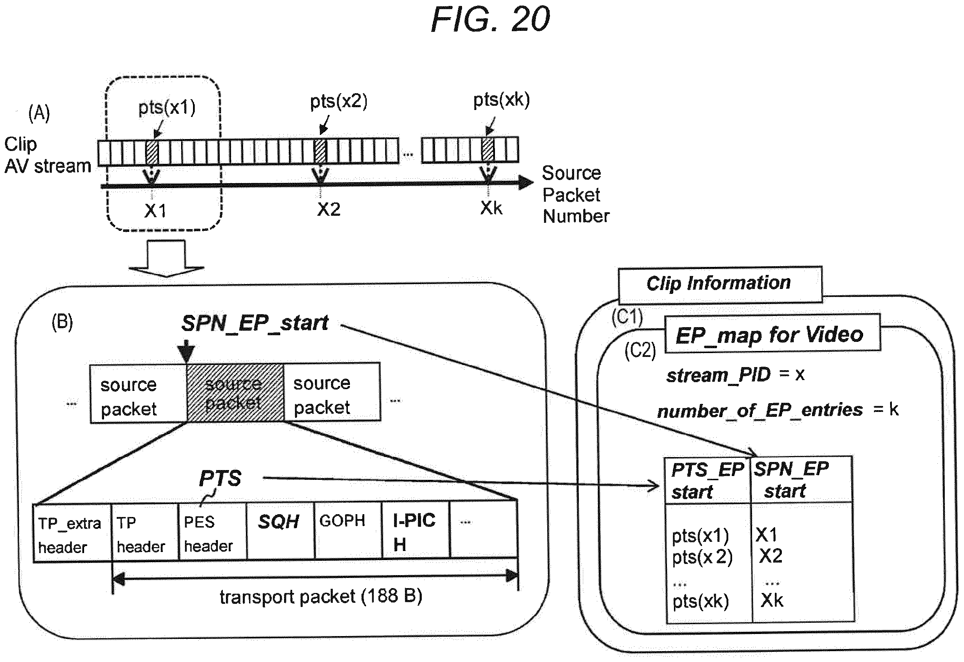

Figs. 20(A) to 20(C2) are diagrams for describing a specific configuration of the EP map (EP_map) and a use example thereof. In a clip AV stream (Clip AV stream) illustrated in Fig. 20(A), video streams including source packets identified by a packet identifier (PID) are multiplexed. The video streams are identified by a PID included in the header of a transport packet in each source packet.

A source packet of the video stream has IPB pictures (that is, I (Intra) picture, P (Predictive) picture, B (Bidirectionally predictive) picture) that constitute MPEG data. The I-picture is picture data which can be decrypted solely. When the other pictures P-picture and B-picture are decrypted, it is necessary to refer to the I-pictured before and after them. For example, a reproduction start point based on random access is set to the packet position having the solely decryptable I-picture.

The EP map stores the position information of the I-picture as the position information of the randomly accessible reproduction start point as the correlation data of the PTS and the SPN. That is, the following items of correlation data are stored.

(a) Time stamp (PTS: Presentation Time Stamp) that represents an access point on the time axis; and
(b) Source packet number (SPN) corresponding to an address indicating the access point using a packet position in a clip AV stream.

By referring to the EP map having such a setting, it is possible to find the location of the I-picture which is the randomly accessible reproduction start position. The EP map (EP_map) is data included in the clip information file.

Detection of the I-picture position based on the EP map will be described with reference to Figs. 20(A) to 20(C2). Fig. 20(A) illustrates a clip AV stream and each rectangle indicates a 192-byte source packet.

In the drawing, a source packet that includes the first byte of the I (Intra) picture is depicted by a hatched rectangle. Anon-hatched rectangle indicates a source packet that includes data which is not a random access point and a source packet that includes data of the other stream.

For example, a source packet corresponding to a source packet number X1 including the first byte of the randomly accessible I-picture of a video stream identified by PID=x is disposed at the position of PTS=pts(x1) on the time axis of the clip AV stream. Similarly, a source packet including the first byte of the subsequently randomly accessible I-picture is regarded as a source packet corresponding to the source packet number X2 and is disposed at the position of PTS=pts(x2) .

As illustrated in Fig. 20(B), a source packet is configured in such a form that a 4-byte header (TP_extra_header) is added to a 188-byte transport packet. The transport packet portion includes a header portion (TP header) and a payload portion.

SPN_EP_start which is registration data of the EP map illustrated in Fig. 20(C2) indicates a source packet number (SPN) of a source packet including the first byte of an access unit that includes an I-picture starting from a sequence header (SQH) .

A series of number set to all packets in the clip AV stream file is the source packet number (SPN). The source packet number of the first source packet in a clip AV stream file is zero, the source packet number of the next packet is 1, and the source packet number is incremented by 1 every subsequent packet.

As illustrated in Fig. 20(C2), the EP map (EP_map) records the following items of data:

Stream PID (stream_PID);
Number of EP entries (number_of_EP_entries);
Presentation time stamp EP start (PTS_EP_start); and
Source packet number EP start (SPN_EP_start).

The stream PID (stream_PID) is a packet identifier (PID) of a transport packet that transports a video stream.

The number of EP entries (number_of_EP_entries) is the number of entries of the pair of PTS_EP_start and SPN_EP_start included in EP_map.

The presentation time stamp EP start (PTS_EP_start) indicates PTS (presentation time stamp) of an Access Unit that starts from a randomly accessible I-picture.

The source packet number EP start (SPN_EP_start) indicates a source packet number (SPN) including the first byte of an access unit (Access Unit) referenced by the value of PTS_EP_start.

The value of the PID (packet identifier) of a video stream is stored in stream_PID, and EP_map() which is table information indicating the correlation of PTS_EP_start and SPN_EP_start is generated.

For example, in the EP map of the video stream of PID=x, a table including correlation data of the following PTS and SPN is described.

PTS=pts(x1) and Source packet number (SPN) X1;

PTS=pts(x2) and Source packet number (SPN) X2; ...,

PTS=pts(xk) and Source packet number (SPN) Xk;

The EP map (EP_map) including the table is stored in a clip information file corresponding to one clip AV stream.

The EP map (EP_map) having such items of data is referenced to specify a decode start position when performing random access or the like, for example.

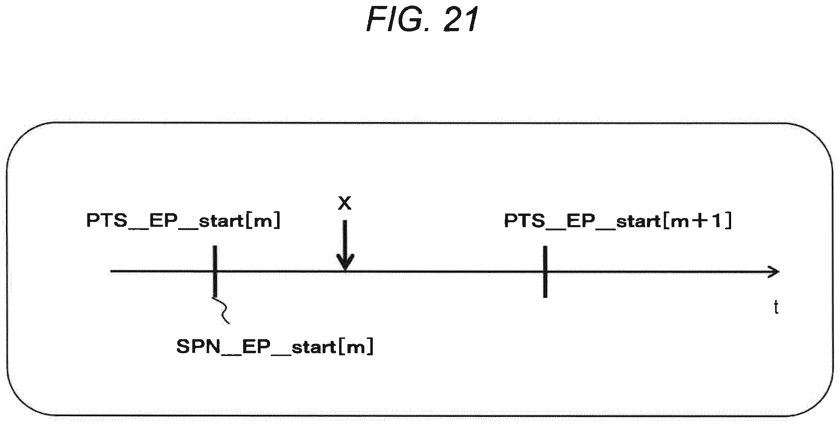

A method of calculating address information from which decoding of a stream in a clip AV stream file starts using the EP_map when starting reproduction from time x on the time axis in the clip will be described with reference to Fig. 21.

As illustrated in Fig. 21, when a playlist (PlayList) has information designating that reproduction is to start from time x on the time axis in a clip, a time stamp [PTS_EP_start [m]] having a value smaller and closest to x is specified.

A source packet number [SPN_EP_start [m]] corresponding to the time stamp [PTS_EP_start [m]] is specified by referring to the EP map in the clip information file on the basis of the time stamp [PTS_EP_start [m]] specified by the playlist information.

In this manner, SPN (that is, [SPN_EP_start [m]]) which is packet position information corresponding to PTS is acquired from the PTS which is reproduction time information determined according to the playlist information using the EP map.

This packet position [SPN_EP_start [m]] is acquired as a reproduction start point in the clip AV stream file (that is, decoding start address information), and it is possible to perform a decoding process and to perform reproduction.

The variation data set to each segment area described in the above-described embodiments is video data of the same scene, for example.

When each item of variation data described with reference to Figs. 1(1) and 1(2) includes one clip file ((clip information file) + (clip AV stream file)), no problem occurs in the process which uses the EP map recorded in one clip information file.

However, in the configuration described in Embodiments 1 and 2 (that is, when one item of variation data includes one source packet or one aligned unit), a plurality of items of variation data included in one segment area are included in one clip AV stream file and are the control target of one clip information file.

That is, one EP map recorded in one clip information file needs to store the correlation data between PTS and SPN on a plurality of items of variation data set to one segment area.

A plurality of items of variation data set to one segment area is video data of the same scene. That is, the same PTS (presentation time stamp) is set.

As described above, in the variation data setting configuration described in Embodiments 1 and 2, it is necessary to register a plurality of different SPNs in correlation with the same PTS.

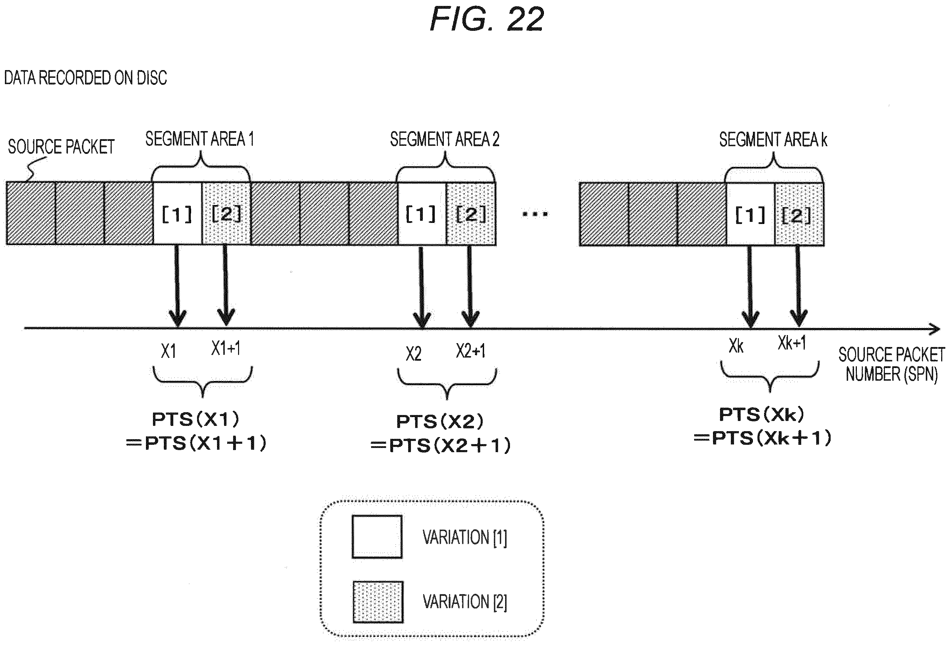

Fig. 22 illustrates a correlation between PTS and SPN when two items of variation data are set to each segment area.

Fig. 22 illustrates a data arrangement example on a disc when variation data is set in units of source packets described in the first embodiment.

One rectangular region is a 192-byte source packet.

Two items of variation data are set to each of segment area 1 to segment area k.

The two items of variation data of each segment area include items of video data of the same scene and are items data encrypted using different segment keys.

For example, in segment area 1,

a source packet corresponding to variation [1] has a source packet number (SPN)=X1, and

a source packet corresponding to variation [2] has a source packet number (SPN)=X1+1.

However, these items of data are the video data of the same scene and have the same presentation time stamp (PTS) . That is,

$$PTS(X1) = PTS(X1+1)$$

Similarly, in segment area 2,

a source packet corresponding to variation [1] has a source packet number (SPN)=X2, and

a source packet corresponding to variation [2] has a source packet number (SPN)=X2+1.

However, these items of data are the video data of the same scene and have the same presentation time stamp (PTS) . That is,

$$PTS(X2) = PTS(X2+1)$$

In the EP map of one clip information file set in correlation with the clip AV stream file stored in the source packet illustrated in Fig. 22, the same presentation time stamp (PTS) is correlated with different source packet numbers (SPN) .

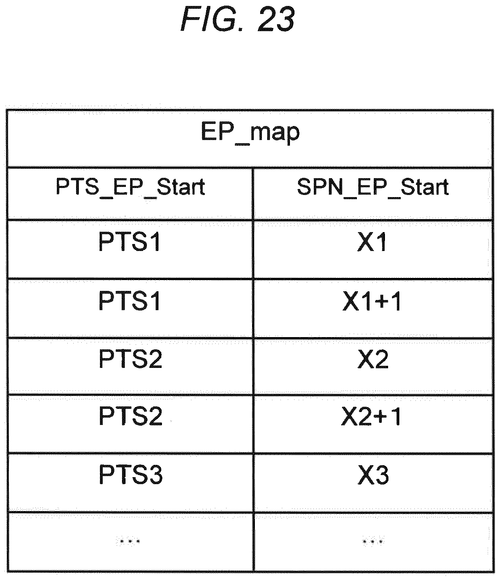

For example, the EP map has such a configuration as illustrated in Fig. 23.

In such a configuration, a reproduction device cannot acquire one source packet number (SPN) on the basis of one presentation time stamp (PTS) by referring to the EP map only. That is, the reproduction device can determine a source packet number (SPN) that the subject device has to access first by comparing the value of SPN_EP_start in the EP map with the value of a source packet number (SPN) that constitutes the reproduction path to be selected by the subject device. However, the reproduction device cannot determine the source packet number (SPN) that the reproduction device has to access using the EP map only.

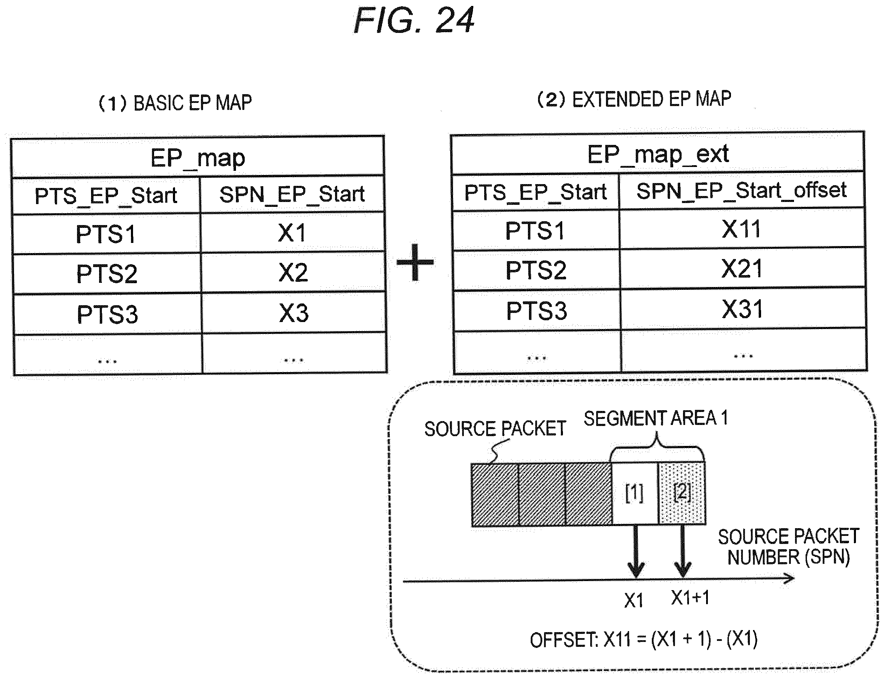

A configuration that solves this problem will be described with reference to Figs. 24(1) and 24(2).

Figs. 24(1) and 24(2) illustrate the following two tables:

(1) Basic EP map (EP_map); and
(2) Extended EP map (EP_map_ext).

The basic EP map illustrated in Fig. 24(1) is an EP map generated on the basis of data (m2ts file) in which one item of reproduction data (one item of variation data) is set to a segment area. That is, the basic EP map is an EP map based on data in which one scene includes one item of reproduction data only similarly to the conventional technique.

The extended EP map illustrated in Fig. 24(2) is data in which source packet number offset data (SPN_EP_start_offset) of each item of variation data is recorded in correlation with the entry of each presentation time stamp (PTS) of the EP map (1).

That is, the basic EP map (1) is used when reproducing variation data [1], and the SPN of variation data [2] reproduced from one PTS is calculated by referring to the two maps of the basic EP map (1) and the extended EP map (2) when reproducing variation data [2] recorded next to variation data [1] of each segment area.

For example, when variation data [2] of PTS1 is reproduced, SPN=X1 corresponding to PTS1 set to the basic EP map (1) is acquired and SPN offset (=X11) corresponding to the PTS1 set to the extended EP map (2) is acquired.

Furthermore, the values X1 and X11 acquired from the two maps are added.
X1+X11

This is the SPN of the reproduction target source packet of variation data [2] of PTS1.

With such setting, even when source packets of different SPNs having the same PTS are set to each segment area, a reproduction device can select a specific item of variation data without errors to perform a reproduction process. That is, it is possible to execute a reproduction process which involves random access by referring to the EP map only.

[3-5. Data embedded in variation data]

Identification data capable of identifying individual items of variation data is embedded in a plurality of items of variation data set to each segment area.

The identification data is embedded as a digital watermark (Watermark), for example.

One item of variation data described in the above-described embodiments has a small data size. That is, the variation data has the following configuration.

(First embodiment) One item of variation data is 192-byte source packet
(Second embodiment) One item of variation data is 6144-byte aligned unit

When variation data having such a small data size is used, the data amount embeddable as identification information (for example, a digital watermark (Watermark)) embeddable in one item of variation data is also small.

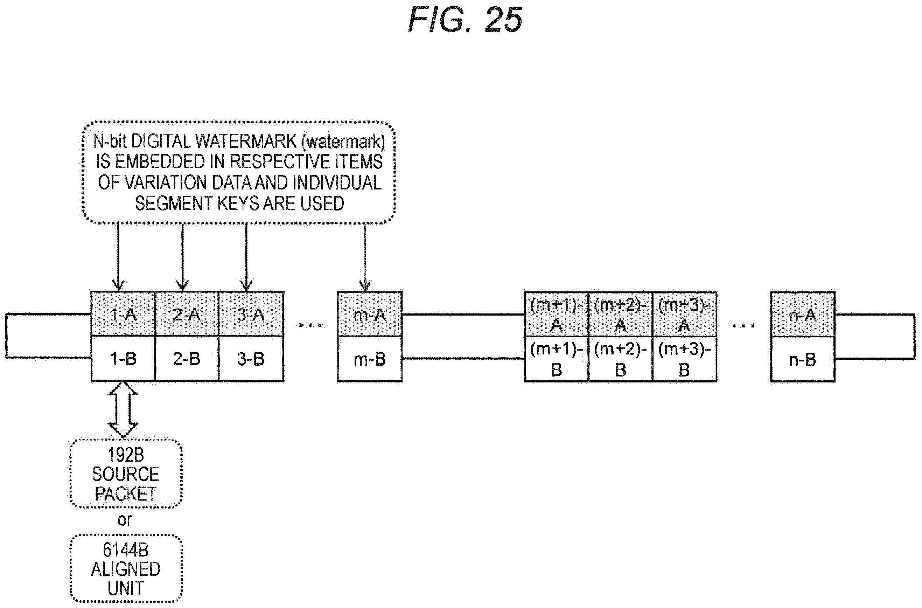

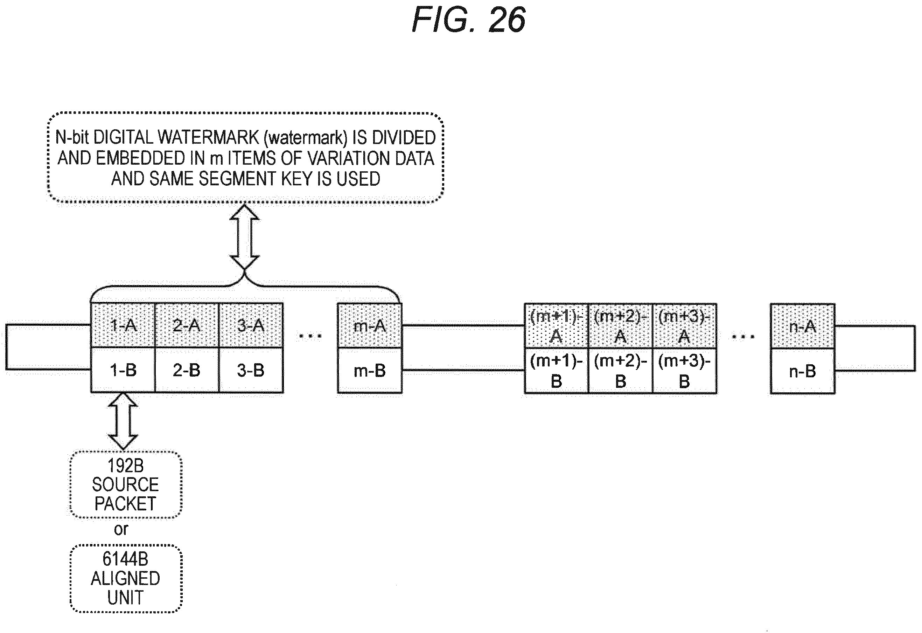

An identification information embedding form which takes such a circumstance into consideration will be described with reference to Figs. 25 and 26.

In a configuration illustrated in Fig. 25, N-bit identification information is embedded in one item of variation data as a digital watermark, and a segment key to be used for decrypting is changed every variation data.

One item of variation data is a 192-byte source packet in the configuration of the first embodiment and is a 6144-byte aligned unit in the configuration of the second embodiment.

Moreover, in the configuration illustrated in Fig. 26, N-bit identification information (digital watermark) is divided and embedded in m sets of items of variation data, and the same segment key is used for decrypting all of these m sets of items of variation data.

Note that one item of variation data is a 192-byte source packet in the configuration of the first embodiment and is a 6144-byte aligned unit in the configuration of the second embodiment.

As described above, by embedding one identification information using a plurality of items of variation data and using the same segment key, it is possible to increase the data amount of embedded information.

Moreover, it is not necessary to excessively increase the number of segment keys.

[4. Hardware configuration example of information processing device]

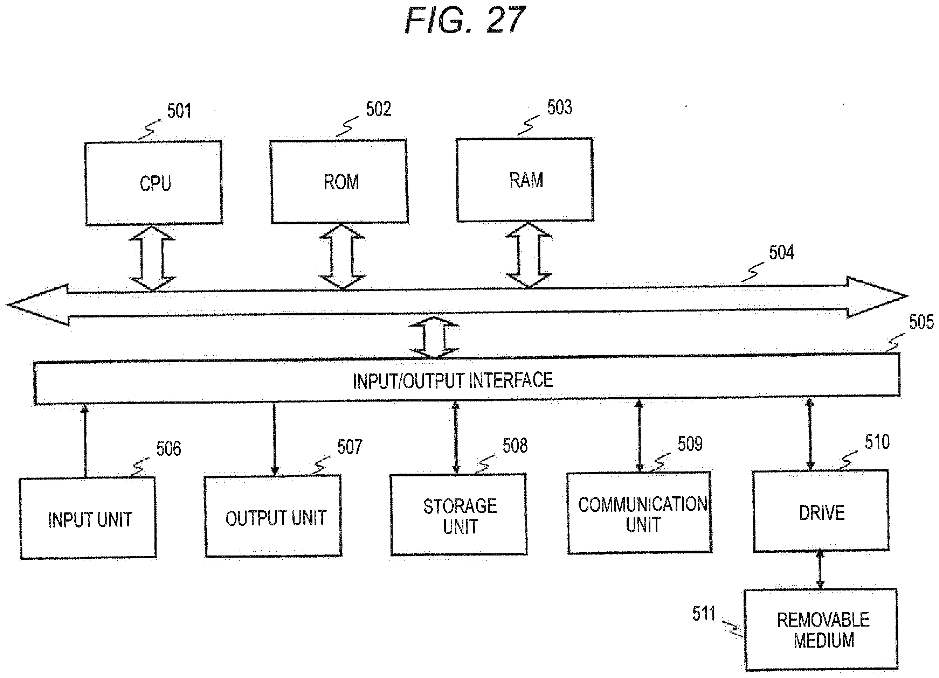

Next, a recording data reproduction process of an information recording medium having the data recording configuration described in the embodiments and a hardware configuration example of an information processing device that performs a recording data reproduction process of an information recording medium having the data recording configuration described in the embodiments will be described with reference to Fig. 27.

A central processing unit (CPU) 501 functions as a data processing unit that executes various processes according to a program stored in a read only memory (ROM) 502 or a storage unit 508. For example, the CPU 501 executes processes according to the sequence described in the embodiments. A program executed by the CPU 501 and data or the like are stored in a random access memory (RAM) 503. The CPU 501, the ROM 502, and the RAM 503 are connected to each other by a bus 504.

The CPU 501 is connected to an input/output interface 505 via the bus 504. The input/output interface 505 is connected to an input unit 506 including various switches, a keyboard, a mouse, a microphone, and the like and an output unit 507 including a display, a speaker, and the like. The CPU 501 executes various processes according to an instruction input from the input unit 506 and outputs a processing result to the output unit 507, for example.

The storage unit 508 connected to the input/output interface 505 is configured as a hard disk or the like, for example, and stores a program executed by the CPU 501 and various items of data. A communication unit 509 functions as a transceiving unit that transmits and receives data communicated via a network such as the Internet or a local area network and a transceiving unit for broadcast waves and communicates with external devices.

A drive 510 connected to the input/output interface 505 drives a removable medium 511 such as a semiconductor memory such as a magnetic disk, an optical disc, a magneto-optical disc, or a memory card to record or read data.

Although data encryption or decryption can be executed by the processing of the CPU 501 as a data processing unit, a codec as dedicated hardware for executing an encryption process or a decryption process may be included.

[5. Summary of configuration of present disclosure]

Embodiments of the present disclosure have been described so far by way of specific examples. However, it is obvious that those skilled in the art can make modifications to and substitutions of the embodiments without departing from the scope of the appended claims. That is, the present invention is disclosed in the form of examples, and the above description should not be interpreted in a restrictive manner. The claims should be taken into account in understanding the subject matter of the present disclosure.

The series of processes described in this specification can be performed by hardware, software, or a combination of hardware and software . In a case where processes are performed by software, a program in which the process sequences are recorded may be installed into a memory incorporated into special-purpose hardware in a computer, or may be installed into a general-purpose computer that can perform various kinds of processes. For example, the program can be recorded beforehand into a recording medium. The program can be installed from the recording medium into a computer, or can be received via a network such as a local area network (LAN) or the Internet and be installed into a recording medium such as an internal hard disk.

The respective processes described in this specification may not be performed in chronological order according to the description, but may be performed in parallel or independently of one another depending on the configuration/capability of the device performing the processes or as necessary. In this specification, a system is a logical assembly of devices, and does not necessarily mean devices with different configurations incorporated into one housing.

INDUSTRIAL APPLICABILITY

As described above, according to a configuration of one embodiment of the present disclosure, a configuration

**EP 3 188 405 B1**

in which the reliable source of illegal copy content is analyzed using content in which a reproduction path can be set is realized.

Specifically, content which has a segment area including a plurality of items of variation data which can be decrypted using different keys and in which a reproduction path corresponding to the selected variation data can be set is used. Each item of variation data is configured such that embedded information such as a digital watermark can be acquired from decrypted data. Each item of variation data includes a 192-byte source packet or a 6144-byte aligned unit. A reproduction device selects and reproduces one item of variation data from each segment area on the basis of a variation data identifier recorded in the variation data.

With this configuration, a configuration in which the reliable source of illegal copy content is analyzed using content in which a reproduction path can be set is realized.

REFERENCE SIGNS LIST

| | |
|---|---|
| 10 | Information recording medium |
| 21, 22 | Reproduction device |
| 31, 32 | Reproduced video |
| 51 | Management information setting portion |
| 52 | Data portion |
| 501 | CPU |
| 502 | ROM |
| 503 | RAM |
| 504 | Bus |
| 505 | Input/output interface |
| 506 | Input unit |
| 507 | Output unit |
| 508 | Storage unit |
| 509 | Communication unit |
| 510 | Drive |
| 511 | Removable medium |

**Claims**

1. An information processing (21, 22) device comprising:

   a data processing unit (501) that executes a content reproduction process, wherein
   the content is content which has a segment area including a plurality of items of variation data that are arranged within a file according to the MPEG-2 TS format, that can be decrypted using different keys and in which a plurality of reproduction paths corresponding to variation data selected as a reproduction target can be set,
   each item of variation data is data configured such that embedded data embedded in the variation data can be acquired from decrypted data, and
   the data processing unit (501) acquires a variation data identifier recorded in each item of variation data, selects one item of variation data from each segment area as a reproduction target on the basis of the acquired variation data identifier, and reproduces the content
   **characterized in that**
   the variation data identifier is a segment key identifier which is an identifier of a segment key to be used for decrypting variation data, and
   the data processing unit (501) selects, as the reproduction target, variation data having a segment key identifier identical to an identifier of a segment key that the information processing device can acquire.

2. The information processing device according to claim 1, wherein
   each of the items of variation data includes a 192-byte source packet, and
   the data processing unit acquires the variation data identifier from a header portion of a transport stream (TS) bucket which is configuration data of the source packet, and
   the data processing unit selects a reproduction target source packet on the basis of the acquired variation data identifier.

3. The information processing device according to claim 2, wherein
the variation data identifier is recorded in a transport priority setting field which is configuration data of the header portion of the transport stream (TS) bucket or a packet identifier (PID) setting field.

4. The information processing device according to claim 1, wherein
each of the items of variation data includes a 6144-byte aligned unit,
the data processing unit (501) acquires the variation data identifier from configuration data of the aligned unit, in particular wherein the variation data identifier is recorded in a copy permission information setting field of the aligned unit, and
the data processing unit selects a reproduction target aligned unit on the basis of the acquired variation data identifier.

5. The information processing device according to any preceding claim, wherein
the data processing unit (501) acquires a segment key to be used for decrypting the variation data from a segment key file that stores an encryption segment key,
the segment key file has data that correlates a start SPN which is a source packet number (SPN) of a source packet positioned at a start position of each segment area with the encryption segment key, and
the data processing unit acquires a segment key to be used for decrypting from the segment key file on the basis of the start SPN of each segment area.

6. The information processing device according to claim 5, wherein
the segment key file records the number of iterations of variation data to which the same segment key is applied, and
the data processing unit (501) executes a decryption process on a number of items of variation data corresponding to the number of iterations using one segment key acquired from the segment key file.

7. The information processing device according to any preceding claim, wherein
the data processing unit (501) selects one item of reproduction target variation data from each segment area by referring to a variation map table that records designation information indicating variation data to be selected as a reproduction target from each segment area.

8. The information processing device according to claim 7, wherein
the variation map table records correlation data between a variant number which can be calculated using a device key stored in the information processing device and an identifier of variation data to be selected in each segment area.

9. The information processing device according to any preceding claim, wherein
a clip information file as a content reproduction control information file is recorded in a medium that records the content,
the clip information file stores an EP map that records, as random access point information, correlation data between a presentation time stamp (PTS) which is reproduction time information and a source packet number (SPN), and
the data processing unit executes a reproduction process which involves a random access by referring to the EP map.

10. The information processing device according to claim 9, wherein
the EP map includes a basic EP map corresponding to a data configuration in which one item of variation data only is set to the segment area and an extended EP map with which a source packet position of each variation data in each segment area can be calculated, and
the data processing unit (501) executes the reproduction process which involves a random access using the basic EP map and the extended EP map.

11. An information recording medium in which content which has a segment area including a plurality of items of variation data that are arranged within a file according to the MPEG-2 TS format, that can be decrypted using different keys and in which a plurality of reproduction paths corresponding to variation data to be selected can be set is stored as recording data, wherein
each of the items of variation data is data configured such that embedded data can be acquired from decrypted data and a variation data identifier that a reproduction device can read is recorded, and
the reproduction device acquires the variation data identifier, selects one item of variation data from each segment area as a reproduction target on the basis of the acquired variation data identifier, and reproduces the content,
**characterized in that** the variation data identifier is a segment key identifier which is an identifier of a segment key to be used for decrypting variation data, such that the reproduction device selects, as the reproduction target, variation data having a segment key identifier identical to an identifier of a segment key that the reproduction device can acquire.

**12.** The information recording medium according to claim 11, wherein
each of the items of variation data includes a 192-byte source packet or a 6144-byte aligned unit.

**13.** An information processing method executed by an information processing device, wherein
the information processing device includes a data processing unit (501) that executes a content reproduction process,
the content is content which has a segment area including a plurality of items of variation data that are arranged within a file according to the MPEG-2 TS format, which can be decrypted using different keys and in which a plurality of reproduction paths corresponding to variation data selected as a reproduction target can be set,
each item of variation data is data configured such that embedded data embedded in the variation data can be acquired from decrypted data, and
the data processing unit (501) acquires a variation data identifier recorded in each item of variation data, selects one item of variation data from each segment area as a reproduction target on the basis of the acquired variation data identifier, and reproduces the content,
**characterized in that** the variation data identifier is a segment key identifier which is an identifier of a segment key to be used for decrypting variation data, and
the data processing unit (501) selects, as the reproduction target, variation data having a segment key identifier identical to an identifier of a segment key that the information processing device can acquire.

**14.** A program that causes an information processing device to process information, wherein
the information processing device includes a data processing unit (501) that executes a content reproduction process,
the content is content which has a segment area including a plurality of items of variation data that are arranged within a file according to the MPEG-2 TS format, which can be decrypted using different keys and in which a plurality of reproduction paths corresponding to variation data selected as a reproduction target can be set,
each item of variation data is data configured such that embedded data embedded in the variation data can be acquired from decrypted data, and
the program causes the data processing unit (501) to acquire a variation data identifier recorded in each item of variation data, select one item of variation data from each segment area as a reproduction target on the basis of the acquired variation data identifier, and reproduce the content,
**characterized in that** the variation data identifier is a segment key identifier which is an identifier of a segment key to be used for decrypting variation data, and
the data processing unit (501) selects, as the reproduction target, variation data having a segment key identifier identical to an identifier of a segment key that the information processing device can acquire.

**Patentansprüche**

**1.** Informationsverarbeitungsvorrichtung (21, 22), umfassend:

Datenverarbeitungseinheit (501), die einen Inhaltswiedergabeprozess ausführt, wobei
der Inhalt ein Inhalt ist, der einen Segmentbereich mit einer Vielzahl von Variationsdaten aufweist, die in einer Datei gemäß dem MPEG-2 TS-Format angeordnet sind, die mit verschiedenen Schlüsseln entschlüsselt werden können und in denen eine Vielzahl von Wiedergabepfaden entsprechend den als Wiedergabeziel ausgewählten Variationsdaten eingestellt werden kann,
jedes Element von Variationsdaten Daten sind, die so ausgelegt sind, dass eingebettete Daten, die in die Variationsdaten eingebettet sind, aus entschlüsselten Daten gewonnen werden können, und
die Datenverarbeitungseinheit (501) eine in jedem Element von Variationsdaten aufgezeichnete Variationsdatenkennung erfasst, ein Element von Variationsdaten aus jedem Segmentbereich als ein Wiedergabeziel auf der Grundlage der erfassten Variationsdatenkennung auswählt, und den Inhalt wiedergibt
**dadurch gekennzeichnet, dass**
die Variationsdatenkennung eine Segmentschlüsselkennung ist, die eine Kennung eines Segmentschlüssels ist, der zum Entschlüsseln von Variationsdaten verwendet werden soll, und
die Datenverarbeitungseinheit (501) als das Wiedergabeziel Variationsdaten mit einer Segmentschlüsselkennung auswählt, die mit einer Kennung eines Segmentschlüssels identisch ist, den die Informationsverarbeitungsvorrichtung erfassen kann.

**2.** Informationsverarbeitungsvorrichtung nach Anspruch 1, wobei
jedes der Elemente von Variationsdaten ein 192-Byte-Quellpaket beinhaltet, und
die Datenverarbeitungseinheit die Variationsdatenkennung von einem Kopfabschnitt eines Transportstrom-(TS)-Buckets erfasst, bei dem es sich um Konfigurationsdaten des Quellpakets handelt, und
die Datenverarbeitungseinheit ein Wiedergabeziel-Quellpaket auf der Grundlage der erfassten Variationsdatenkennung auswählt.

3. Informationsverarbeitungsvorrichtung nach Anspruch 2, wobei
die Variationsdatenkennung in einem Transportprioritäteinstellfeld, bei dem es sich um Konfigurationsdaten des Kopfabschnitts des Transportstrom-(TS)-Buckets handelt, oder in einem in Paketkennungs-(PID)-Einstellfeld aufgezeichnet wird.

4. Informationsverarbeitungsvorrichtung nach Anspruch 1, wobei
jedes der Elemente von Variationsdaten eine 6144 Byte große ausgerichtete Einheit beinhaltet,
die Datenverarbeitungseinheit (501) die Variationsdatenkennung aus Konfigurationsdaten der ausgerichteten Einheit erfasst, insbesondere wobei die Variationsdatenidenkennung in einem Kopierberechtigungsinformationseinstellfeld der ausgerichteten Einheit aufgezeichnet ist, und
die Datenverarbeitungseinheit eine am Wiedergabeziel ausgerichtete Einheit auf der Grundlage der erfassten Variationsdatenkennung auswählt.

5. Informationsverarbeitungsvorrichtung nach einem der vorhergehenden Ansprüche, wobei
die Datenverarbeitungseinheit (501) einen Segmentschlüssel erfasst, der zum Entschlüsseln der Variationsdaten aus einer Segmentschlüsseldatei verwendet werden soll, die einen Verschlüsselungssegmentschlüssel speichert, die Segmentschlüsseldatei Daten aufweist, die eine Start-SPN korrelieren, die eine Quellpaketnummer (SPN) eines Quellpakets ist, das an einer Startposition jedes Segmentbereichs mit dem Verschlüsselungssegmentschlüssel positioniert ist, und die Datenverarbeitungseinheit einen Segmentschlüssel erfasst, der zum Entschlüsseln aus der Segmentschlüsseldatei auf der Grundlage der Start-SPN jedes Segmentbereichs verwendet werden soll.

6. Informationsverarbeitungsvorrichtung nach Anspruch 5, wobei
die Segmentschlüsseldatei die Anzahl von Iterationen von Variationsdaten, auf die der gleiche Segmentschlüssel angewendet wird, aufzeichnet, und
die Datenverarbeitungseinheit (501) einen Entschlüsselungsprozess für eine Anzahl von Variationsdaten ausführt, die der Anzahl der Iterationen entspricht, wobei ein Segmentschlüssel verwendet wird, der aus der Segmentschlüsseldatei gewonnen wird.

7. Informationsverarbeitungsvorrichtung nach einem der vorhergehenden Ansprüche, wobei
die Datenverarbeitungseinheit (501) ein Element von Wiedergabezielvariationsdaten aus jedem Segmentbereich unter Bezugnahme auf eine Variationszuordnungstabelle auswählt, die Kennungsinformationen aufzeichnet, die Variationsdaten angeben, die als Wiedergabeziel aus jedem Segmentbereich auszuwählen sind.

8. Informationsverarbeitungsvorrichtung nach Anspruch 7, wobei
die Variationszuordnungstabelle Korrelationsdaten zwischen einer Variantennummer aufzeichnet, die mit einem in der Informationsverarbeitungsvorrichtung gespeicherten Vorrichtungsschlüssel und einer in jedem Segmentbereich zu wählenden Kennung von Variationsdaten berechnet werden kann.

9. Informationsverarbeitungsvorrichtung nach einem der vorhergehenden Ansprüche, wobei
eine Clip-Informationsdatei als eine Informationsdatei zur Inhaltswiedergabekontrolle auf einem Medium aufgezeichnet wird, das den Inhalt aufzeichnet,
die Clip-Informationsdatei eine EP-Map speichert, die, als Direktzugriffspunktsinformationen, Korrelationsdaten zwischen einem Präsentationszeitstempel (PTS), bei dem es sich um Wiedergabezeitinformationen handelt, und einer Quellpaketnummer (SPN) aufzeichnet, und
die Datenverarbeitungseinheit einen Wiedergabeprozess durchführt, der einen Direktzugriff unter Bezugnahme auf die EP-Map beinhaltet.

10. Informationsverarbeitungsvorrichtung nach Anspruch 9, wobei
die EP-Map eine grundlegende EP-Map beinhaltet, die einer Datenkonfiguration entspricht, in der nur ein Element von Variationsdaten auf den Segmentbereich eingestellt ist, und eine erweiterte EP-Map, mit der eine Quellpaketposition jeglicher Variationsdaten in jedem Segmentbereich berechnet werden kann, und
die Datenverarbeitungseinheit (501) den Wiedergabeprozess ausführt, der einen Direktzugriff unter Verwendung der grundlegenden EP-Map und der erweiterten EP-Map beinhaltet.

**11.** Informationsaufzeichnungsmedium, bei dem Inhalt, der einen Segmentbereich mit einer Vielzahl von Variationsdaten aufweist, die innerhalb einer Datei gemäß dem MPEG-2 TS-Format angeordnet sind, die mit unterschiedlichen Schlüsseln entschlüsselt werden können und bei dem eine Vielzahl von Wiedergabepfaden entsprechend den zu wählenden Variationsdaten eingestellt werden kann, als Aufzeichnungsdaten gespeichert ist, wobei

jedes der Elemente von Variationsdaten Daten sind, die so ausgelegt sind, dass eingebettete Daten aus entschlüsselten Daten gewonnen werden können, und als eine Variationsdatenkennung, die durch eine Wiedergabevorrichtung lesbar ist, aufgezeichnet wird, und

die Wiedergabevorrichtung die Variationsdatenkennung erfasst, ein Element von Variationsdaten aus jedem Segmentbereich als Wiedergabeziel auf der Grundlage der erfassten Variationsdatenkennung auswählt, und den Inhalt wiedergibt,

**dadurch gekennzeichnet, dass** die Variationsdatenkennung eine Segmentschlüsselkennung ist, die eine Kennung eines Segmentschlüssels ist, der zum Entschlüsseln von Variationsdaten so verwendet werden soll, dass die Wiedergabevorrichtung als Wiedergabeziel Variationsdaten mit einer Segmentschlüsselkennung auswählt, die mit einer Kennung eines Segmentschlüssels identisch ist, den die Wiedergabevorrichtung erfassen kann.

**12.** Informationsaufzeichnungsmedium nach Anspruch 11, wobei
jedes der Elemente von Variationsdaten ein 192 Byte großes Quellpaket oder eine 6144 Byte große ausgerichtete Einheit beinhaltet.

**13.** Informationsverarbeitungsverfahren, das von einer Informationsverarbeitungsvorrichtung ausgeführt wird, wobei
die Informationsverarbeitungsvorrichtung eine Datenverarbeitungseinheit (501) beinhaltet, die einen Inhaltswiedergabeprozess ausführt,

der Inhalt ein Inhalt ist, der einen Segmentbereich mit einer Vielzahl von Variationsdaten aufweist, die innerhalb einer Datei gemäß dem MPEG-2 TS-Format angeordnet sind, die mit verschiedenen Schlüsseln entschlüsselt werden können und in denen eine Vielzahl von Wiedergabepfaden entsprechend den als Wiedergabeziel ausgewählten Variationsdaten eingestellt werden kann,

jedes Element von Variationsdaten Daten sind, die so ausgelegt sind, dass eingebettete Daten, die in die Variationsdaten eingebettet sind, aus entschlüsselten Daten gewonnen werden können, und

die Datenverarbeitungseinheit (501) eine in jedem Element von Variationsdaten aufgezeichnete Variationsdatenkennung erfasst, ein Element von Variationsdaten aus jedem Segmentbereich als ein Wiedergabeziel auf der Grundlage der erfassten Variationsdatenkennung auswählt, und den Inhalt wiedergibt,

**dadurch gekennzeichnet, dass** die Variationsdatenkennung eine Segmentschlüsselkennung ist, die eine Kennung eines Segmentschlüssels ist, der zum Entschlüsseln von Variationsdaten verwendet werden soll, und

die Datenverarbeitungseinheit (501) als Wiedergabeziel Variationsdaten mit einer Segmentschlüsselkennung auswählt, die mit einer Kennung eines Segmentschlüssels identisch ist, den die Informationsverarbeitungsvorrichtung erfassen kann.

**14.** Programm, das eine Informationsverarbeitungsvorrichtung veranlasst, Informationen zu verarbeiten, wobei
die Informationsverarbeitungsvorrichtung eine Datenverarbeitungseinheit (501) beinhaltet, die einen Inhaltswiedergabeprozess ausführt,

der Inhalt Inhalt ist, der einen Segmentbereich mit einer Vielzahl von Variationsdaten aufweist, die innerhalb einer Datei gemäß dem MPEG-2 TS-Format angeordnet sind, die mit verschiedenen Schlüsseln entschlüsselt werden können und in denen eine Vielzahl von Wiedergabepfaden entsprechend den als Wiedergabeziel ausgewählten Variationsdaten eingestellt werden kann,

jedes Element von Variationsdaten Daten sind, die so ausgelegt sind, dass eingebettete Daten, die in die Variationsdaten eingebettet sind, aus entschlüsselten Daten gewonnen werden können, und

das Programm die Datenverarbeitungseinheit (501) veranlasst, eine in jedem Element von Variationsdaten aufgezeichnete Variationsdatenkennung zu erfassen, ein Element von Variationsdaten aus jedem Segmentbereich als ein Wiedergabeziel auf der Grundlage der erfassten Variationsdatenkennung auszuwählen, und den Inhalt wiederzugeben,

**dadurch gekennzeichnet, dass** die Variationsdatenkennung eine Segmentschlüsselkennung ist, die eine Kennung eines Segmentschlüssels ist, der zum Entschlüsseln von Variationsdaten verwendet werden soll, und

die Datenverarbeitungseinheit (501) als Wiedergabeziel Variationsdaten mit einer Segmentschlüsselkennung auswählt, die mit einer Kennung eines Segmentschlüssels identisch ist, den die Informationsverarbeitungsvorrichtung erfassen kann.

**Revendications**

1.  Dispositif de traitement d'informations (21, 22) comprenant :

    une unité de traitement de données (501) qui exécute un processus de reproduction de contenu, dans lequel le contenu est un contenu qui a une zone de segment comportant une pluralité d'éléments de données de variation qui sont placés à l'intérieur d'un fichier selon le format MPEG-2 TS, qui peut être décrypté en utilisant différentes clés et dans lequel une pluralité de chemins de reproduction correspondant à des données de variation sélectionnées comme une cible de reproduction peuvent être établis,
    chaque élément de données de variation représente des données configurées de sorte que des données incorporées, incorporées dans les données de variation, peuvent être acquises à partir de données décryptées, et
    l'unité de traitement de données (501) acquiert un identifiant de données de variation enregistré dans chaque élément de données de variation, sélectionne un élément de données de variation à partir de chaque zone de segment comme une cible de reproduction sur la base de l'identifiant de données de variation acquis, et reproduit le contenu
    **caractérisé en ce que**
    l'identifiant de données de variation est un identifiant de clé de segment qui est un identifiant d'une clé de segment devant être utilisée pour décrypter des données de variation, et
    l'unité de traitement de données (501) sélectionne, comme la cible de reproduction, des données de variation ayant un identifiant de clé de segment identique à un identifiant d'une clé de segment que le dispositif de traitement d'informations peut acquérir.

2.  Dispositif de traitement d'informations selon la revendication 1, dans lequel
    chacun des éléments de données de variation comporte un paquet source de 192 octets, et
    l'unité de traitement de données acquiert l'identifiant de données de variation à partir d'une partie d'en-tête d'un bucket de flux de transport (TS) qui représente des données de configuration du paquet source, et
    l'unité de traitement de données sélectionne un paquet source de cible de reproduction sur la base de l'identifiant de données de variation acquis.

3.  Dispositif de traitement d'informations selon la revendication 2, dans lequel
    l'identifiant de données de variation est enregistré dans un champ de définition de priorité de transport qui représente des données de configuration de la partie d'en-tête du bucket de flux de transport (TS) ou un champ de définition d'identifiant de paquet (PID).

4.  Dispositif de traitement d'informations selon la revendication 1, dans lequel
    chacun des éléments de données de variation comporte une unité alignée de 6144 octets,
    l'unité de traitement de données (501) acquiert l'identifiant de données de variation à partir de données de configuration de l'unité alignée, en particulier l'identifiant de données de variation étant enregistré dans un champ de définition d'informations de permission de copie de l'unité alignée, et
    l'unité de traitement de données sélectionne une unité alignée de cible de reproduction sur la base de l'identifiant de données de variation acquis.

5.  Dispositif de traitement d'informations selon l'une quelconque des revendications précédentes, dans lequel
    l'unité de traitement de données (501) acquiert une clé de segment devant être utilisée pour décrypter les données de variation à partir d'un fichier de clé de segment qui stocke une clé de segment de cryptage,
    le fichier de clé de segment a des données qui corrèlent un SPN de début qui est un numéro de paquet source (SPN) d'un paquet source positionné à une position de début de chaque zone de segment avec la clé de segment de cryptage, et
    l'unité de traitement de données acquiert une clé de segment devant être utilisée pour un décryptage à partir du fichier de clé de segment sur la base du SPN de début de chaque zone de segment.

6.  Dispositif de traitement d'informations selon la revendication 5, dans lequel
    le fichier de clé de segment enregistre le nombre d'itérations de données de variation auxquelles la même clé de segment est appliquée, et
    l'unité de traitement de données (501) exécute un processus de décryptage sur un nombre d'éléments de données de variation correspondant au nombre d'itérations en utilisant une clé de segment acquise à partir du fichier de clé de segment.

**7.** Dispositif de traitement d'informations selon l'une quelconque des revendications précédentes, dans lequel l'unité de traitement de données (501) sélectionne un élément de données de variation de cible de reproduction à partir de chaque zone de segment en se référant à une table de mappage de variations qui enregistre des informations de désignation indiquant des données de variation devant être sélectionnées comme une cible de reproduction à partir de chaque zone de segment.

**8.** Dispositif de traitement d'informations selon la revendication 7, dans lequel la table de mappage de variations enregistre des données de corrélation entre un numéro de variante qui peut être calculé en utilisant une clé de dispositif stockée dans le dispositif de traitement d'informations et un identifiant de données de variation devant être sélectionné dans chaque zone de segment.

**9.** Dispositif de traitement d'informations selon l'une quelconque des revendications précédentes, dans lequel un fichier d'informations clip sous la forme d'un fichier d'informations de contrôle de reproduction de contenu est enregistré dans un support qui enregistre le contenu,
le fichier d'informations clip stocke une mappe EP qui enregistre, comme des informations de point d'accès aléatoire, des données de corrélation entre une estampille temporelle de présentation (PTS) qui représente des informations de temps de reproduction et un numéro de paquet source (SPN), et
l'unité de traitement de données exécute un processus de reproduction qui implique un accès aléatoire en se référant à la mappe EP.

**10.** Dispositif de traitement d'informations selon la revendication 9, dans lequel la mappe EP comporte une mappe EP de base correspondant à une configuration de données dans laquelle un élément de données de variation uniquement est affecté à la zone de segment et une mappe EP étendue avec laquelle une position de paquet source de chaque donnée de variation dans chaque zone de segment peut être calculée, et
l'unité de traitement de données (501) exécute le processus de reproduction qui implique un accès aléatoire en utilisant la mappe EP de base et la mappe EP étendue.

**11.** Support d'enregistrement d'informations dans lequel un contenu qui a une zone de segment comportant une pluralité d'éléments de données de variation qui sont placés à l'intérieur d'un fichier selon le format MPEG-2 TS, qui peut être décrypté en utilisant différentes clés et dans lequel une pluralité de chemins de reproduction correspondant à des données de variation devant être sélectionnées peuvent être établis, est stocké comme des données d'enregistrement,
chacun des éléments de données de variation représentant des données configurées de sorte que des données incorporées peuvent être acquises à partir de données décryptées et un identifiant de données de variation qu'un dispositif de reproduction peut lire étant enregistré, et
le dispositif de reproduction acquérant l'identifiant de données de variation, sélectionnant un élément de données de variation à partir de chaque zone de segment comme une cible de reproduction sur la base de l'identifiant de données de variation acquis, et reproduisant le contenu,
**caractérisé en ce que** l'identifiant de données de variation est un identifiant de clé de segment qui est un identifiant d'une clé de segment devant être utilisée pour décrypter des données de variation, de sorte que le dispositif de reproduction sélectionne, comme la cible de reproduction, des données de variation ayant un identifiant de clé de segment identique à un identifiant d'une clé de segment que le dispositif de reproduction peut acquérir.

**12.** Support d'enregistrement d'informations selon la revendication 11, dans lequel chacun des éléments de données de variation comporte un paquet source de 192 octets ou une unité alignée de 6144 octets.

**13.** Procédé de traitement d'informations exécuté par un dispositif de traitement d'informations, dans lequel le dispositif de traitement d'informations comporte une unité de traitement de données (501) qui exécute un processus de reproduction de contenu,
le contenu est un contenu qui a une zone de segment comportant une pluralité d'éléments de données de variation qui sont placés à l'intérieur d'un fichier selon le format MPEG-2 TS, qui peut être décrypté en utilisant différentes clés et dans lequel une pluralité de chemins de reproduction correspondant à des données de variation sélectionnées comme une cible de reproduction peuvent être établis,
chaque élément de données de variation représente des données configurées de sorte que des données incorporées, incorporées dans les données de variation, peuvent être acquises à partir de données décryptées, et
l'unité de traitement de données (501) acquiert un identifiant de données de variation enregistré dans chaque élément de données de variation, sélectionne un élément de données de variation à partir de chaque zone de segment comme une cible de reproduction sur la base de l'identifiant de données de variation acquis, et reproduit le contenu,

**caractérisé en ce que** l'identifiant de données de variation est un identifiant de clé de segment qui est un identifiant d'une clé de segment devant être utilisée pour décrypter des données de variation, et

l'unité de traitement de données (501) sélectionne, comme la cible de reproduction, des données de variation ayant un identifiant de clé de segment identique à un identifiant d'une clé de segment que le dispositif de traitement d'informations peut acquérir.

14. Programme qui amène un dispositif de traitement d'informations à traiter des informations, dans lequel

le dispositif de traitement d'informations comporte une unité de traitement de données (501) qui exécute un processus de reproduction de contenu,

le contenu est un contenu qui a une zone de segment comportant une pluralité d'éléments de données de variation qui sont placés à l'intérieur d'un fichier selon le format MPEG-2 TS, qui peut être décrypté en utilisant différentes clés et dans lequel une pluralité de chemins de reproduction correspondant à des données de variation sélectionnées comme une cible de reproduction peuvent être établis,

chaque élément de données de variation représente des données configurées de sorte que des données incorporées, incorporées dans les données de variation, peuvent être acquises à partir de données décryptées, et

le programme amène l'unité de traitement de données (501) à acquérir un identifiant de données de variation enregistré dans chaque élément de données de variation, sélectionner un élément de données de variation à partir de chaque zone de segment comme une cible de reproduction sur la base de l'identifiant de données de variation acquis, et reproduire le contenu,

**caractérisé en ce que** l'identifiant de données de variation est un identifiant de clé de segment qui est un identifiant d'une clé de segment devant être utilisée pour décrypter des données de variation, et

l'unité de traitement de données (501) sélectionne, comme la cible de reproduction, des données de variation ayant un identifiant de clé de segment identique à un identifiant d'une clé de segment que le dispositif de traitement d'informations peut acquérir.

FIG. 1

(1) REPRODUCTION PATH A OF REPRODUCTION DEVICE A

SEGMENT 1   SEGMENT 2   SEGMENT 3                    SEGMENT 15

(2) REPRODUCTION PATH B OF REPRODUCTION DEVICE B

SEGMENT 1   SEGMENT 2   SEGMENT 3                    SEGMENT 15

EP 3 188 405 B1

# FIG. 2

31 REPRODUCED VIDEO A
(= ONE SEGMENT VIDEO [AV016]
OF REPRODUCTION PATH A)

IDENTIFICATION INFORMATION
(Forensic mark) INDICATING
VARIATION IDENTIFIER
(AV016) IS EMBEDDED.

21 REPRODUCTION DEVICE A

10

22 REPRODUCTION DEVICE B

32 REPRODUCED VIDEO B
(= ONE SEGMENT VIDEO [AV002]
OF REPRODUCTION PATH B)

IDENTIFICATION INFORMATION
(Forensic mark) INDICATING
VARIATION IDENTIFIER
(AV002) IS EMBEDDED.

EP 3 188 405 B1

## FIG. 3

10 INFORMATION RECORDING
MEDIUM (MEDIUM)
(BD-ROM)

Root

51
- AACS
  - CPSUnitKey.cci
  - SegmentKey.cci

52
- BDMV
  - index.bdmv } INDEX FILE
  - MovieObject.bdmv } MOVIE OBJECT FILE
  - PLAYLIST
    - 00001.mpls } PLAYLIST FILE
  - CLIPINF
    - 01001.clpi
    - 01002.clpi } CLIP INFORMATION FILE
  - STREAM
    - 01001.m2ts
    - 01002.m2ts } CLIP AV STREAM
  - BDJO
    - 00001.bdjo
    - 00002.bdjo } BDJ Object FILE

FIG. 4

## FIG. 5

MPEG-2 transport stream(=Clip AV Stream)

MPEG-2TS (transport stream)

(A) MPEG-2TS

| Aligned Unit | Aligned Unit | Aligned Unit | . . . | Aligned Unit | Aligned Unit |

←— 6144B —→

(B) ALIGNED UNIT

| source packet-0 | source packet-1 | source packet-2 | . . . | source packet-30 | source packet-31 |

←— 192B —→

(C) SOURCE PACKET

| TP_extra _header | Transport packet |

←— 4B —→ ←— 188B —→

(D) TRANSPORT PACKET (TS PACKET)

| TS Packet header | PAYLOAD (PES PACKET/PES HEADER, AND THE LIKE) |

←— 4B —→ ←— 184B —→

(E) TS PACKET HEADER

| Sync byte | Transport error indicator | Payload unit start indicator | Transport priority | PID | Transport scrambling control | Adaptation field control | Continuity counter | Adaptation field |

EP 3 188 405 B1

# FIG. 6

(1)MPEG-2 TS · · · | TS packet | | | TS PACKET (Pn) | | | · · ·

(2)PES packets · · · | PES header | Video AU | TS PACKET PAYLOAD | | · · ·

(3) TS PACKET (Pn) | TS packet header | S C | H | S H | slice data |

## FIG. 7

| (A) MPEG -2TS | Aligned Unit | Aligned Unit | Aligned Unit | ... | Aligned Unit | Aligned Unit |
|---|---|---|---|---|---|---|

←— 6144B —→

| (B) ALIGNED UNIT | source packet-0 | source packet-1 | source packet-2 | ... | source packet-30 | source packet-31 |
|---|---|---|---|---|---|---|

←— 192B —→

| (C) SOURCE PACKET | TP_extra _header | Transport packet |
|---|---|---|

←— 4B —→ ←— 188B —→

### (1) VARIATION DATA SETTING EXAMPLE

| AV001 | | AV018 | | **AV035** |
| AV002 | | **AV019** | | AV036 |
| **AV000** AV003 **AV017** | | AV020 **AV034** | | AV037 |
| AV004 | | AV021 | | AV038 |
| ⋮ | | ⋮ | | ⋮ |
| **AV016** | | AV033 | | AV050 |

⎫ Variations

SEGMENT 1 SEGMENT 2 SEGMENT 3 → time

EP 3 188 405 B1

*FIG. 8*

DTS (DECODING TIME STAMP)
PTS (PRESENTATION TIME STAMP)

(1) SOURCE PACKET

| TP_extra_header | Transport packet |
|---|---|
| 4B | 188B |

(2) TRANSPORT PACKET (TS PACKET)

| TS Packet header | PAYLOAD (PES PACKET/PES HEADER, AND THE LIKE) |
|---|---|
| 4B | 184B |

(3) TS PACKET HEADER

| Sync byte | Transport error indicator | Payload unit start indicator | Transport priority | PID | Transport scrambling control | Adaptation field control | Continuity counter | Adaptation field |
|---|---|---|---|---|---|---|---|---|

VARIATION DATA IDENTIFIER SETTING EXAMPLE 1
IDENTIFIER (VARIATION DATA IDENTIFIER) USED FOR DETERMINING WHETHER SOURCE PACKET IS REPRODUCTION TARGET SOURCE PACKET IS SET TO TRANSPORT PRIORITY
ex. VARIATION DATA [1]

VARIATION DATA IDENTIFIER SETTING EXAMPLE 2
IDENTIFIER (VARIATION DATA IDENTIFIER) USED FOR DETERMINING WHETHER SOURCE PACKET IS REPRODUCTION TARGET SOURCE PACKET IS SET TO PACKET ID (PID)
ex. VARIATION DATA [1]

EP 3 188 405 B1

*FIG. 9*

```
        ┌─────────────┐
        │    START    │
        └──────┬──────┘
               │
               ▼                                    S103
        ┌──────────────┐            ┌──────────────────────────────┐
        │              │  S101      │  SEQUENTIALLY ACQUIRE SOURCE  │◄──┐
        │ SELECT       │            │  PACKET WHICH IS CONFIGURATION│   │
        │ PLAYLIST FILE│            │  DATA OF CLIP AV STREAM FILE  │   │
        └──────┬───────┘            └──────────────┬───────────────┘   │
               │                                   │         S104       │
               ▼              S102                 ▼                    │
  ┌────────────────────────┐      ┌──────────────────────────────────┐ │
  │ ACQUIRE CLIP FILE      │      │ ACQUIRE VARIATION DATA IDENTIFIER │ │
  │ (CLIP INFORMATION FILE,│      │ STORED IN HEADER OF TS PACKET     │ │
  │ CLIP AV STREAM FILE)   │      │ WHICH IS CONFIGURATION DATA       │ │
  │ SELECTED ACCORDING TO  │      │ OF SOURCE PACKET                  │ │
  │ PLAYLIST FILE AND      │      └──────────────┬───────────────────┘ │
  │ START REPRODUCTION     │                     │                      │
  └────────────────────────┘                     ▼                      │
                                          ╱─────────────────╲   S105    │
                                         ╱  DETERMINE WHETHER ╲  No      │
                                        ╱ SOURCE PACKET IS     ╲────────┤
                                        ╲ REPRODUCTION TARGET  ╱         │
                                         ╲SOURCE PACKET ON THE╱          │
                                          ╲BASIS OF VARIATION╱           │
                                           ╲DATA IDENTIFIER?╱            │
                                            ╲──────┬───────╱             │
                                          Yes      │       S106          │
                                                   ▼                     │
                                        ┌────────────────────────┐       │
                                        │ DECRYPT AND REPRODUCE  │       │
                                        │ PAYLOAD OF TS PACKET   │       │
                                        │ (IN SEGMENT AREA,      │       │
                                        │ DECRYPT PAYLOAD USING  │       │
                                        │ SEGMENT KEY ACQUIRED   │       │
                                        │ FROM SEGMENT KEY FILE) │       │
                                        └───────────┬────────────┘       │
                                                    ▼                    │
                                            ╱───────────────╲   S107     │
                                           ╱ PROCESS         ╲  No        │
                                          ╱ COMPLETED FOR     ╲──────────┘
                                          ╲ ALL SOURCE PACKETS?╱
                                           ╲─────────┬────────╱
                                            Yes      │
                                                     ▼
                                             ┌─────────────┐
                                             │     END     │
                                             └─────────────┘
```

# FIG. 10

(A) MPEG
-2TS

| Aligned Unit | Aligned Unit | Aligned Unit | ... | Aligned Unit | Aligned Unit |
|---|---|---|---|---|---|

← 6144B →

(B) ALIGNED
UNIT

| source packet-0 | source packet-1 | source packet-2 | ... | source packet-30 | source packet-31 |
|---|---|---|---|---|---|

← 192B →

(1) VARIATION DATA SETTING EXAMPLE

| AV001 | | AV018 | | AV035 |
|---|---|---|---|---|
| AV002 | | AV019 | | AV036 |
| AV000 AV003 AV017 | | AV020 AV034 | | AV037 |
| AV004 | | AV021 | | AV038 |
| ⋮ | | ⋮ | | ⋮ |
| AV016 | | AV033 | | AV050 |

} Variations

SEGMENT 1   SEGMENT 2   SEGMENT 3

time

EP 3 188 405 B1

# FIG. 11

MPEG-2TS (transport stream)

(1) MPEG
-2TS

| Aligned Unit | Aligned Unit | Aligned Unit | . . . | Aligned Unit | Aligned Unit |

← 6144B →

← 2bit →

(2) ALIGNED
UNIT

| copy permission indicator | |

VARIATION DATA IDENTIFIER SETTING EXAMPLE
IDENTIFIER (VARIATION DATA IDENTIFIER) USED FOR
DETERMINING WHETHER ALIGNED UNIT IS REPRODUCTION
TARGET ALIGNED UNIT IS SET TO COPY PERMISSION INFORMATION
(COPY PERMISSION INDICATOR)
ex. VARIATION DATA [1]

EP 3 188 405 B1

# FIG. 12

(a) COPY PERMISSION INFORMATION SETTING EXAMPLE (CURRENT)

| | COPY PERMISSION INFORMATION (copy permission indicator) | MEANING |
|---|---|---|
| (1) | 00 | UNENCRYPTED DATA (unencrypted) |
| (2) | 01 | RESERVE |
| (3) | 10 | RESERVE |
| (4) | 11 | ENCRYPTED DATA (encrypted) |

(b) COPY PERMISSION INFORMATION SETTING EXAMPLE (EXTENDED EXAMPLE)

| | COPY PERMISSION INFORMATION (copy permission indicator) | MEANING |
|---|---|---|
| (1) | 00 | UNENCRYPTED DATA (unencrypted) |
| (2) | 01 | ENCRYPTED DATA (encrypted) & [VARIATION DATA [1]] |
| (3) | 10 | ENCRYPTED DATA (encrypted) & [VARIATION DATA [2]] |
| (4) | 11 | ENCRYPTED DATA (encrypted) & [CPS UNIT KEY] |

EP 3 188 405 B1

## FIG. 13

(c) COPY PERMISSION INFORMATION SETTING EXAMPLE (EXTENDED EXAMPLE)

| | COPY PERMISSION INFORMATION (copy permission indicator) | MEANING |
|---|---|---|
| (1) | 00 | UNENCRYPTED DATA (unencrypted) |
| (2) | 01 | ENCRYPTED DATA (encrypted) & [SEGMENT KEY [1]] |
| (3) | 10 | ENCRYPTED DATA (encrypted) & [SEGMENT KEY [2]] |
| (4) | 11 | ENCRYPTED DATA (encrypted) & [CPS UNIT KEY] |

## FIG. 14

START

↓

**S201**
SELECT PLAYLIST FILE

↓

**S202**
ACQUIRE CLIP FILE (CLIP INFORMATION FILE, CLIP AV STREAM FILE) SELECTED ACCORDING TO PLAYLIST FILE AND START REPRODUCTION

↓

**S203**
SEQUENTIALLY ACQUIRE ALIGNED UNIT WHICH IS CONFIGURATION DATA OF CLIP AV STREAM FILE

↓

**S204**
ACQUIRE VARIATION DATA IDENTIFIER STORED IN HEADER OF ALIGNED UNIT

↓

**S205**
DETERMINE WHETHER SOURCE PACKET IS REPRODUCTION TARGET SOURCE PACKET ON THE BASIS OF VARIATION DATA IDENTIFIER?

No → (back to S203)

Yes ↓

**S206**
DECRYPT AND REPRODUCE PAYLOAD OF TS PACKET OF CONFIGURATION OF ALIGNED UNIT (IN SEGMENT AREA, DECRYPT PAYLOAD USING SEGMENT KEY ACQUIRED FROM SEGMENT KEY FILE)

↓

**S207**
PROCESS COMPLETED FOR ALL ALIGNED UNITS?

No → (back to S203)

Yes ↓

END

EP 3 188 405 B1

# FIG. 15

| SEGMENT KEY FILE | | | | | | |
|---|---|---|---|---|---|---|
| (1) | (2) | (3) | (4) | (5−1) | ・・・ | (5−n) |
| CLIP FILE IDENTIFIER (32b) | SEGMENT NUMBER | START SOURCE PACKET NUMBER (Start SPN) (32b) | NUMBER OF ITERATIONS (iteration) (8b) | ENCRYPTION SEGMENT KEY (128b) & [IDENTIFIER] CORRESPONDING TO VARIATION [1] | ・・・ | ENCRYPTION SEGMENT KEY (128b) & [IDENTIFIER] CORRESPONDING TO VARIATION [n] |
| 12345 | 1 | 0x34820 | 4 | 0x39・・・AC [S1−xxx] | ・・・ | 0xDA・・・5E [S1−xyz] |
| | 2 | 0x37984 | 3 | 0x86・・・33 [S2−yyy] | ・・・ | 0x30・・・98 [S2−zzz] |
| ・・・ | ・・・ | ・・・ | ・・・ | ・・・ | ・・・ | ・・・ |

EP 3 188 405 B1

## FIG. 16

(1) VARIATION DATA RECORDING EXAMPLE 1 ON DISC (NUMBER OF VARIATIONS n = 2, NUMBER OF ITERATIONS (iteration) = 3)

6144B
ALIGNED
UNIT

START
SPN

| VARIATION DATA [1] | VARIATION DATA [2] | VARIATION DATA [1] | VARIATION DATA [2] | VARIATION DATA [1] | VARIATION DATA [2] |

(2) VARIATION DATA RECORDING EXAMPLE 2 ON DISC (NUMBER OF VARIATIONS n = 2, NUMBER OF ITERATIONS (iteration) = 3)

6144B
ALIGNED
UNIT

START
SPN

| VARIATION DATA [1] | VARIATION DATA [1] | VARIATION DATA [1] | VARIATION DATA [2] | VARIATION DATA [2] | VARIATION DATA [2] |

EP 3 188 405 B1

## FIG. 17

| VARIATION MAP TABLE | | | | |
|---|---|---|---|---|
| | SEGMENT 1 | SEGMENT 2 | ... | SEGMENT M |
| | NUMBER OF ITERATIONS = 2 | NUMBER OF ITERATIONS = 3 | ... | NUMBER OF ITERATIONS = 3 |
| | VARIATION DATA IDENTIFIER CORRESPONDING TO REPRODUCTION PATH | VARIATION DATA IDENTIFIER CORRESPONDING TO REPRODUCTION PATH | ... | VARIATION DATA IDENTIFIER CORRESPONDING TO REPRODUCTION PATH |
| REPRODUCTION PATH X (VARIANT NUMBER = X) | VARIATION DATA [1] | VARIATION DATA [4] | ... | VARIATION DATA [5] |
| REPRODUCTION PATH Y (VARIANT NUMBER = Y) | VARIATION DATA [3] | VARIATION DATA [1] | ... | VARIATION DATA [2] |
| ... | ... | ... | ... | ... |

## FIG. 18

| VARIATION MAP TABLE | | | | |
|---|---|---|---|---|
| | SEGMENT 1 | SEGMENT 2 | ... | SEGMENT M |
| | NUMBER OF ITERATIONS = 2 | NUMBER OF ITERATIONS = 3 | ... | NUMBER OF ITERATIONS = 3 |
| | VARIATION DATA IDENTIFIER CORRESPONDING TO REPRODUCTION PATH (SEGMENT KEY IDENTIFIER IS USED) | VARIATION DATA IDENTIFIER CORRESPONDING TO REPRODUCTION PATH (SEGMENT KEY IDENTIFIER IS USED) | ... | VARIATION DATA IDENTIFIER CORRESPONDING TO REPRODUCTION PATH (SEGMENT KEY IDENTIFIER IS USED) |
| REPRODUCTION PATH X (VARIANT NUMBER = X) | SEGMENT KEY [1] | SEGMENT KEY [6] | ... | SEGMENT KEY [5] |
| REPRODUCTION PATH Y (VARIANT NUMBER = Y) | SEGMENT KEY [3] | SEGMENT KEY [6] | ... | SEGMENT KEY [2] |
| ... | ... | ... | ... | ... |

EP 3 188 405 B1

## FIG. 19

EP 3 188 405 B1

# FIG. 20

EP 3 188 405 B1

*FIG. 21*

PTS_EP_start[m]

PTS_EP_start[m+1]

x

SPN_EP_start[m]

t

# FIG. 22

DATA RECORDED ON DISC

SOURCE PACKET

SEGMENT AREA 1    SEGMENT AREA 2    ...    SEGMENT AREA k

[1] [2]    [1] [2]    [1] [2]

$X1$    $X1+1$    $X2$    $X2+1$    $Xk$    $Xk+1$    SOURCE PACKET NUMBER (SPN)

$$PTS(X1) = PTS(X1+1)$$

$$PTS(X2) = PTS(X2+1)$$

$$PTS(Xk) = PTS(Xk+1)$$

VARIATION [1]

VARIATION [2]

EP 3 188 405 B1

## FIG. 23

| EP_map | |
| --- | --- |
| PTS_EP_Start | SPN_EP_Start |
| PTS1 | X1 |
| PTS1 | X1+1 |
| PTS2 | X2 |
| PTS2 | X2+1 |
| PTS3 | X3 |
| ... | ... |

EP 3 188 405 B1

## FIG. 24

### (1) BASIC EP MAP

| EP_map | |
|---|---|
| PTS_EP_Start | SPN_EP_Start |
| PTS1 | X1 |
| PTS2 | X2 |
| PTS3 | X3 |
| ... | ... |

**+**

### (2) EXTENDED EP MAP

| EP_map_ext | |
|---|---|
| PTS_EP_Start | SPN_EP_Start_offset |
| PTS1 | X11 |
| PTS2 | X21 |
| PTS3 | X31 |
| ... | ... |

SOURCE PACKET  SEGMENT AREA 1

[1] [2]

SOURCE PACKET NUMBER (SPN)

X1  X1+1

OFFSET: X11 = (X1 + 1) - (X1)

EP 3 188 405 B1

# FIG. 25

N-bit DIGITAL WATERMARK (watermark)
IS EMBEDDED IN RESPECTIVE ITEMS
OF VARIATION DATA AND INDIVIDUAL
SEGMENT KEYS ARE USED

| 1-A | 2-A | 3-A | | m-A | (m+1)-A | (m+2)-A | (m+3)-A | | n-A |
|-----|-----|-----|-----|-----|---------|---------|---------|-----|-----|
| 1-B | 2-B | 3-B | | m-B | (m+1)-B | (m+2)-B | (m+3)-B | | n-B |

192B
SOURCE
PACKET

or

6144B
ALIGNED
UNIT

EP 3 188 405 B1

## FIG. 26

N-bit DIGITAL WATERMARK (watermark) IS DIVIDED
AND EMBEDDED IN m ITEMS OF VARIATION DATA
AND SAME SEGMENT KEY IS USED

| 1-A | 2-A | 3-A | | m-A | | (m+1)-A | (m+2)-A | (m+3)-A | | n-A |
|-----|-----|-----|-----|-----|-----|-----|-----|-----|-----|-----|
| 1-B | 2-B | 3-B | ... | m-B | | (m+1)-B | (m+2)-B | (m+3)-B | ... | n-B |

192B
SOURCE
PACKET

or

6144B
ALIGNED
UNIT

EP 3 188 405 B1

# FIG. 27

CPU 501   ROM 502   RAM 503

504 (bus)

INPUT/OUTPUT INTERFACE 505

INPUT UNIT 506   OUTPUT UNIT 507   STORAGE UNIT 508   COMMUNICATION UNIT 509   DRIVE 510

REMOVABLE MEDIUM 511

EP 3 188 405 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006236121 A
- JP 2007043336 A
- US 20080022131 A1
- US 20040156621 A1